(19) Europäisches Patentamt
European Patent Office
Office européen des brevets

(11) **EP 4 722 792 A1**

(12) **EUROPEAN PATENT APPLICATION**
published in accordance with Art. 153(4) EPC

(43) Date of publication:
08.04.2026 Bulletin 2026/15

(21) Application number: 24811132.0

(22) Date of filing: 22.05.2024

(51) International Patent Classification (IPC):
*G02C 7/00* (2006.01)   *G02B 1/08* (2006.01)
*G02B 3/00* (2006.01)   *G02B 3/14* (2006.01)
*G02F 1/13* (2006.01)   *G02F 1/133* (2006.01)
*G02F 1/1333* (2006.01)

(52) Cooperative Patent Classification (CPC):
G02B 1/08; G02B 3/00; G02B 3/14; G02C 7/00;
G02F 1/13; G02F 1/133; G02F 1/1333

(86) International application number:
PCT/JP2024/018771

(87) International publication number:
WO 2024/242126 (28.11.2024 Gazette 2024/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.05.2023 JP 2023085804

(71) Applicant: Elcyo Co., Ltd.
.
Kyoto-shi, Kyoto 615-8245 (JP)

(72) Inventors:
• LEE Sunri
Kyoto-shi, Kyoto 615-8245 (JP)
• SHIBUYA Giichi
Kyoto-shi, Kyoto 615-8245 (JP)
• INA Hirohiko
Kyoto-shi, Kyoto 615-8245 (JP)
• YOSHII Hiroto
Shinjuku-ku, Tokyo 1600023 (JP)

(74) Representative: Hasegawa, Kan
Patentanwaltskanzlei Hasegawa
Untere Hauptstraße 56
85354 Freising (DE)

(54) **EYEGLASSES**

(57) Eyeglasses (10) are provided with a variable focus lens (LN), which is a liquid crystal lens divided into a plurality of driving regions, and a lens controller (FC) that controls a refractive index distribution generated in the variable focus lens (LN). The eyeglasses (10) further include a guidance data acquisition unit (GG) that acquires guidance data relating to a gaze direction to which the wearer is to be guided. Based on the guidance data, the lens controller (FC) determines at least one driving region corresponding to the gaze direction to be guided as a gaze guidance region, and generates a Fresnel lens-like refractive index distribution in the gaze guidance region.

Fig.2

**Description**

TECHNICAL FIELD

The present invention relates to eyeglasses.

BACKGROUND ART

Conventionally, research has been conducted on applying variable-focus lenses to eyeglasses.

Patent Literature 1 describes eyeglasses provided with an optical element capable of adjusting a focal length by controlling a refractive index of a liquid crystal layer, and further discloses that the focal length is controlled in accordance with a gaze direction.

Patent Literature 2 describes a method for slowing progression of myopia by using an optical device having a predetermined off-axis aberration control design that delays ocular growth.

Patent Literature 3 describes training of a wearer's vision by displaying a target presentation so as not to overlook an object to be gazed at.

CITATION LIST

Patent Literature

[Patent Literature 1] Japanese Unexamined Patent Application Publication No. 2019-002977
[Patent Literature 2] Japanese Patent No. 5172148
[Patent Literature 3] Japanese Unexamined Patent Application Publication No. 2023-030002

SUMMARY OF THE INVENTION

Technical Problem

In eyeglasses provided with an optical element, such as a liquid crystal lens, whose optical characteristics can be electrically changed, improvement in user convenience and quality of life has been an issue.

In view of the above-described issue, it is an object of the present invention to provide eyeglasses capable of improving user convenience and quality of life.

Solution to Problem

The present invention can be understood from various aspects, and examples of these aspects are as follows.

(1) Eyeglasses according to the present invention, in view of the above issue, include a variable focus lens, a lens controller that controls a refractive index distribution generated within the variable focus lens, and a guidance data acquisition unit configured to acquire a guidance data regarding a gaze direction to which a wearer is to be guided. The lens controller controls the refractive index distribution based on the guidance data.

(2) In the eyeglasses according to (1), the variable focus lens is a liquid crystal lens, and is divided into a plurality of driving regions. The lens controller determines, based on the guidance data, at least one driving region corresponding to the gaze direction to be guided as a gaze guidance region, and generate a Fresnel lens-like refractive index distribution within the gaze guidance region.

(3) In the eyeglasses according to (2), the lens controller determines at least one driving region located outside the gaze guidance region as a non-guidance region, and controls such that visibility in the non-guidance region is worse than that in the gaze guidance region.

(4) In the eyeglasses according to (3), each of the plurality of driving regions performs focus control for forming a focus. The driving region determined as the non-guidance region is controlled such that visibility is worse than when the focus formation control is performed.

(5) In the eyeglasses according to (3), a gaze direction detector that detects the gaze direction of the wearer is further included. The lens controller determines at least one driving region corresponding to the gaze direction detected by the gaze direction detector as a gaze region, and controls such that visibility in the gaze region is worse than in the gaze guidance region and better than in the non-guidance region.

(6) In the eyeglasses according to any one of (3) to (5), the lens controller controls such that, in the non-guidance region, a degree of degradation in visibility periodically changes.

(7) In the eyeglasses according to any one of (5) to (6), the lens controller controls such that, in the gaze region, a degree of degradation in visibility periodically changes.

(8) In the eyeglasses according to any one of (5) to (7), the lens controller controls such that visibility improves from the gaze region toward the gaze guidance region.

(9) In the eyeglasses according to any one of (1) to (8), a gaze direction detector that detects the gaze direction of the wearer is further included. The lens controller has switching means to switch between a guidance control mode for controlling the refractive index distribution based on the guidance data and a detection control mode for controlling the refractive index distribution in accordance with the gaze direction detected by the gaze direction detector.

(10) In the eyeglasses according to any one of (3) to (9), a plurality of modes are set such that degrees of degradation in visibility in the non-guidance region are different. The lens controller has switching means to switch between the plurality of modes.

(11) In the eyeglasses according to (10), means for tracking eye movement of the wearer is further included. The lens controller switches between the plurality of modes based on the eye movement.

(12) In the eyeglasses according to any one of (1) to (11), a gaze space data acquisition unit that acquires gaze space data regarding a state of a space on which a gaze of the wearer falls is further included. The guidance data is acquired based on the gaze space data.

(13) In the eyeglasses according to any one of (1) to (11), a sound detector that detects sound emitted around the wearer is further included. The guidance data is acquired based on the sound detected by the sound detector.

(14) In the eyeglasses according to any one of (1) to (11), the guidance data acquisition unit acquires the guidance data by receiving data from an external source.

(15) In the eyeglasses according to any one of (1) to (11), the eyeglasses include an eyeglasses-type information device having an image display device on a front side of the variable focus lens. The image display device displays an image representing a view from a viewpoint of the wearer based on three-dimensional space data indicating a situation of a three-dimensional space in which the wearer is placed. The guidance data acquisition unit acquires the guidance data based on a positional relationship in the three-dimensional space between an object to be gazed at by the wearer and the wearer.

(16) In the eyeglasses according to any one of (1) to (15), a lens power model data storage unit that stores lens power model data indicating a relationship between a distance to an object gazed at by the wearer and a lens power to be set is further included.

(17) In the eyeglasses according to (16), the lens controller further acquires distance data indicating a distance to an object located on an extension of the gaze direction to be guided, and generates, within the gaze guidance region, a Fresnel lens-like refractive index distribution corresponding to the lens lens power determined based on the distance data and the lens power model data.

(18) In the eyeglasses according to (16), a gaze space data acquisition unit that acquires gaze space data regarding a state of a space on which a gaze of the wearer falls is further included. The lens controller determines, based on the gaze direction to which the wearer is to be guided and the gaze space data, a distance to an object to be gazed at after gaze guidance, and generates, within the gaze guidance region, a Fresnel lens-like refractive index distribution based on the distance and the lens power model data.

(19) In the eyeglasses according to (3), the eyeglasses include an eyeglasses-type information device having an image display device configured to display an image superimposed on a real world observed by the wearer through the variable focus lens. The image display device controls to display the image in a portion superimposed on the non-guidance region.

(20) In the eyeglasses according to (19), the non-guidance region is controlled s such that a degree of degradation in visibility periodically changes. The image display device varies brightness of the image displayed in a portion superimposed on the non-guidance region in accordance with the degree of degradation in visibility (increase brightness when visibility degrades).

(21) Eyeglasses according to the present invention, include a variable focus lens, a lens controller that controls a refractive index distribution generated within the variable focus lens, and an image display device that displays an image superimposed on a real world observed by the wearer through the variable focus lens. The variable focus lens is a liquid crystal lens, and is divided into a plurality of driving regions. The lens controller controls such that visibility is degraded in at least one of the driving regions that overlaps an image displayed by the image display device.

(22) In the eyeglasses according to (21), an eye-movement detector that detects eye movement of the wearer is further included. The lens controller varies a degree of degradation in visibility in the at least one driving region in accordance with the eye movement and/or the image display device varies brightness of an image displayed so as to overlap the at least one driving region in accordance with the eye movement.

(23) In the eyeglasses according to (21), an eye-movement detector that detects eye movement of the wearer is further included. When a gaze direction of the wearer derived from the eye movement overlaps the driving region controlled such that visibility is degraded and an image displayed by the image display device, the lens controller varies a degree of degradation in visibility in the at least one driving region based on the eye movement and/or the image display device varies brightness of an image displayed so as to overlap the at least one driving region in accordance with the eye movement.

(24) In the eyeglasses according to (23), it is determined, based on data indicating a distance to an object gazed at by the wearer, whether the wearer is gazing at a superimposed image or at the real world. When the wearer is gazing at the real world, the lens controller reduces a degree of degradation in visibility in the at least one driving region. When the wearer is gazing at the superimposed image, the image display device increases brightness of the superimposed image displayed so as to overlap the at least one driving region.

(25) Eyeglasses according to the present invention, a liquid crystal member having a liquid crystal layer and is divided into a plurality of driving regions, and a controller that controls a refractive index distribution generated in the liquid crystal layer. A guidance data acquisition unit that acquires guidance data regarding a gaze direction to which the wearer is to be guided is included. The controller determines, based on the guidance data, a gaze guidance region corresponding to at least one driving region corresponding to a gaze direction to which the wearer is to be guided, determines at least one driving region located outside the gaze guidance region as a non-guidance region, and controls such that visibility in the non-guidance region is worse than that in the gaze guidance region. The controller includes means for switching between a plurality of modes set to provide different levels of visibility in the non-guidance region.

(26) In the eyeglasses according to (25), means for detecting eye movement of the wearer is further included. The controller switches between the plurality of modes based on the eye movement.

(27) Eyeglasses according to the present invention, a liquid crystal member having a liquid crystal layer and is divided into a plurality of driving regions, a controller that controls a refractive index distribution generated in the liquid crystal layer, and a gaze direction detector that detects a gaze direction of the wearer. A guidance data acquisition unit that acquires guidance data regarding a gaze direction to which the wearer is to be guided is further included. The controller includes means for switching between a guidance control mode for controlling the plurality of driving regions based on the guidance data and a detection control mode for controlling the plurality of driving regions based on the gaze direction acquired by the gaze direction detector.

(28) In the eyeglasses according to any one of (25) to (27), the eyeglasses include an eyeglasses-type information device having an image display device on a front side of the liquid crystal member. The image display device displays an image representing a view from a viewpoint of the wearer based on three-dimensional space data indicating a state of a three-dimensional space in which the wearer is located. The guidance data acquisition unit acquires the guidance data based on a positional relationship between an object to be gazed at by the wearer and the wearer in the three-dimensional space.

(29) An optical element according to the present invention, includes a liquid crystal lens having a liquid crystal layer and a plurality of driving regions formed in an arcuate shape about an optical axis, and a lens controller that controls a refractive index distribution in the liquid crystal layer. The lens controller generates a Fresnel-lens-like refractive index distribution in some of the plurality of driving regions and controls driving regions different from the some of the driving regions such that visibility in the different driving regions is worse than that in the some of the driving regions.

(30) An optical element according to the present invention, includes a liquid crystal layer, a liquid crystal lens having a plurality of driving regions, and a lens controller that controls a refractive index distribution in the liquid crystal layer. The plurality of driving regions respectively have a plurality of unit electrodes having different widths and connected to the same input wiring. In the plurality of driving regions, a Fresnel lens-like refractive index distribution composed of a plurality of sawtooth refractive index distributions is formed by applying a common control voltage to the plurality of unit electrodes. The plurality of unit electrodes respectively correspond to the plurality of sawtooth refractive index distributions. The lens controller generates a Fresnel-lens-like refractive index distribution in some of the plurality of driving regions and controls driving regions different from the some of the driving regions such that visibility in the different driving regions is worse than that in the some of the driving regions.

(31) Eyeglasses according to the present invention, includes a liquid crystal layer, a controller that controls a refractive index distribution of the liquid crystal layer, a gaze direction detector that detects a gaze direction of the wearer, an optical center region including an optical center, and a peripheral region located outside the optical center region. The controller includes means for switching, based on the gaze direction, between first control for controlling a focal position of the peripheral region to be closer to the eyeglasses than a focal position of the optical center region, and second control for degrading visibility in the peripheral region relative to that in the optical center region.

(32) In the eyeglasses according to (31), the controller executes the first control when the gaze direction corresponds to the optical center region, and executes the second control when the gaze direction does not correspond to the optical center region.

(33) In the eyeglasses according to (31) or (32), a lens power model data storage unit that stores lens power model data indicating a relationship between a distance to an object gazed at by the wearer and a lens lens power to be set, and a distance derivation unit that derives a distance to the object gazed at by the wearer based on the gaze direction are further included. The liquid crystal layer overlaps the optical center region and the peripheral region. The controller controls a focal position of the optical center region based on the distance derived by the distance derivation unit and the lens power model data when the gaze direction corresponds to the optical center region.

(34) Eyeglasses according to the present invention, includes a liquid crystal layer, a controller that controls a refractive index distribution of the liquid crystal layer, an optical center region including an optical center, and a peripheral region located outside the optical center region. The controller controls a refractive index distribution of the liquid crystal layer in the peripheral region so as to oscillate a focal position in the peripheral region, thereby at least a part of an oscillation range of the focal position in the peripheral region is on a side closer to the eyeglasses than a focal position in the optical center region.

(35) In the eyeglasses according to (34), one cycle of oscillation control of a focal position in the peripheral region includes a front-side movement period during which the focal position in the peripheral region changes to move toward the eyeglasses side, and a rear-side movement period during which the focal position in the peripheral region changes to move toward a side opposite to the eyeglasses. The front-side movement period is longer than the rear-side movement period.

(36) In the eyeglasses according to (34) or (35), a gaze direction detector that detects a gaze direction of the wearer is further included. The controller oscillates a focal position in the peripheral region when the gaze direction corresponds to the optical center region.

(37) Eyeglasses according to the present invention, include a liquid crystal lens having a liquid crystal layer and being divided into a plurality of driving regions, a lens controller that controls a refractive index distribution of the liquid crystal layer, and a gaze direction detector that detects a gaze direction of the wearer. The controller determines, based on the gaze direction, at least one of the driving regions corresponding to the gaze direction and at least one of the driving regions located around the driving region corresponding to the gaze direction. In the driving region located around the driving region corresponding to the gaze direction, a focal position is controlled to oscillate. At least a part of an oscillation range by the oscillation control is positioned in front of a focal position formed by the driving region corresponding to the gaze direction.

(38) In the eyeglasses according to (1), the guidance data includes data regarding a direction different from a gaze direction directed by the wearer. And, in the eyeglasses according to (1), a gaze direction detector configured to detect a gaze direction of the wearer is further included. The gaze direction to be guided is a direction different from the gaze direction detected by the gaze direction detector.

Effect of the invention

According to the present invention, it is possible to provide eyeglasses capable of improving user convenience and quality of life.

BRIEF DESCRIPTION OF THE DRAWINGS

FIG. 1 is a diagram schematically illustrating the configuration of eyeglasses according to a first embodiment.

FIG. 2 is a diagram for explaining the functional configuration of an eyeglasses system of the first embodiment.

FIG. 3A is a diagram schematically illustrating the configuration of a variable-focus lens according to the first embodiment.

FIG. 3B is a diagram schematically illustrating the electrode arrangement of a liquid-crystal element according to the first embodiment.

FIG. 3C is a schematic diagram showing a refractive-index distribution appearing in a cross section of the liquid-crystal element taken along any direction through the center in FIG. 3B.

FIG. 4 is a schematic plan view for explaining the planar configuration of unit electrodes in the first embodiment.

FIG. 5 is a schematic diagram for explaining a sectional view taken along line V-V in FIG. 4.

FIG. 6 is a diagram showing a sectional view taken along line VI-VI in FIG. 3B.

FIG. 7 is a diagram for explaining lead wires connected to the unit electrodes.

FIG. 8 is a diagram for explaining control of the liquid-crystal element by a lens controller of the first embodiment.

FIG. 9 is a flowchart illustrating processing for controlling the variable-focus lens in the eyeglasses of the first embodiment.

FIG. 10A is a diagram for explaining control of driving regions in Modification 1 of the first embodiment.

FIG. 10B is a diagram for explaining a first guidance-control mode in Modification 2 of the first embodiment.

FIG. 10C is a diagram for explaining a second guidance-control mode in Modification 2 of the first embodiment.

FIG. 11 is a diagram schematically illustrating two liquid-crystal elements in Modification 3 of the first embodiment.

FIG. 12 is a diagram schematically illustrating two liquid-crystal elements in Modification 4 of the first embodiment.

FIG. 13 is a diagram for explaining the functional configuration of eyeglasses according to a second embodiment.

FIG. 14 is a diagram for explaining driving regions of the liquid-crystal element in the eyeglasses of the second embodiment.

FIG. 15A is a schematic diagram for explaining control by a lens controller of the eyeglasses in the second embodiment.

FIG. 15B is a schematic diagram for explaining control by the lens controller of the eyeglasses in the second embodiment.

FIG. 15C is a schematic diagram for explaining control by the lens controller FC of the eyeglasses in Modification 1 of the second embodiment.

DETAILED DESCRIPTION OF THE INVENTION

[First Embodiment]

<1. Overview>

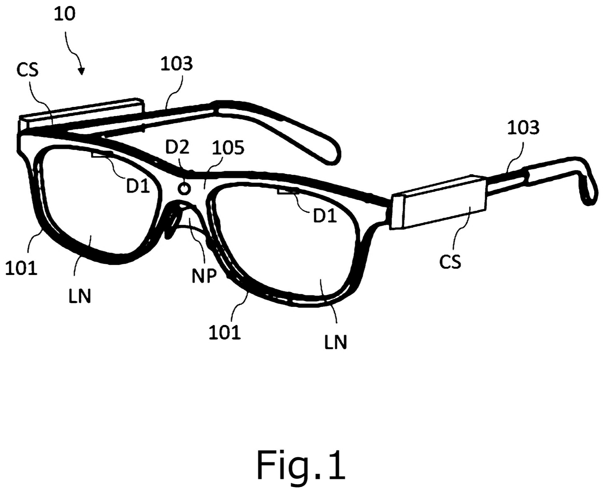

FIG. 1 is a schematic diagram illustrating the configuration of eyeglasses 10 (variable-focus eyeglasses) according to the first embodiment. As shown in the figure, the eyeglasses 10 include a pair of variable focus lenses LN fixed by a pair of rims 101, and are further provided with a pair of temples 103, a bridge 105, and nose pads NP. Each of the left and right temples 103 includes a housing CS in which a control circuit and a power supply circuit for the variable focus lenses LN, a communication circuit, a battery, and the like are accommodated. A gaze direction detector D1 is disposed on an upper portion of each of the left and right rims 101, and a gaze space data acquisition unit D2 is disposed on the nose pads NP. The variable focus lenses LN of the present embodiment are liquid-crystal lenses whose focal length can be varied and which are capable of forming convex-type and concave-type Fresnel-lens-like refractive index distributions, details of which will be described later.

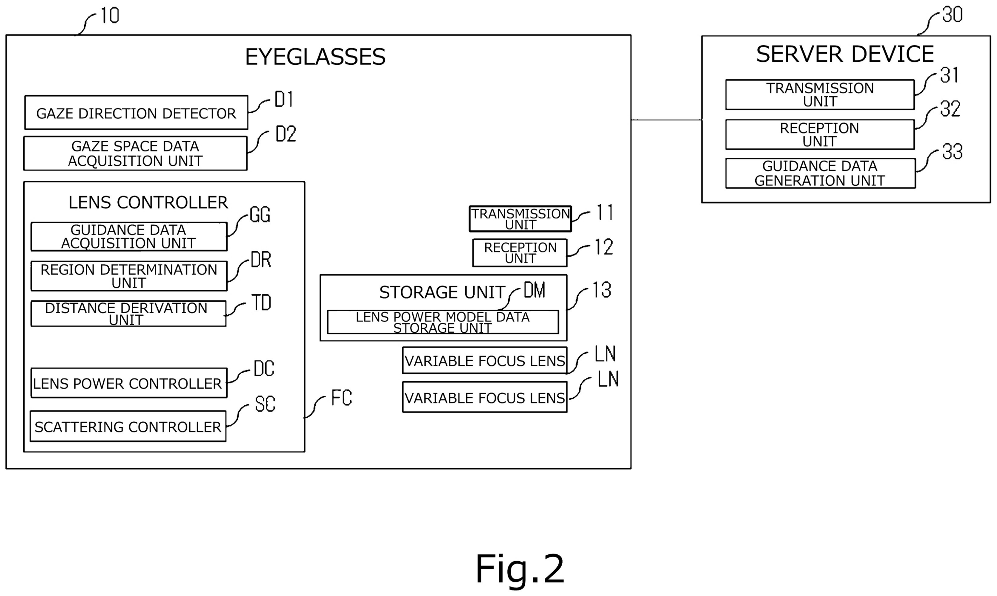

FIG. 2 is a diagram for explaining the functional configuration of an eyeglasses system 1 according to the present embodiment. As shown in the figure, the eyeglasses system 1 includes at least one eyeglasses 10 and a server device 30. The eyeglasses system 1 is installed, for example, in an amusement facility or a factory facility, and the eyeglasses 10 and the server device 30 are connected to each other through a network line so as to be capable of mutually communicating data. The eyeglasses 10 of the present embodiment receive guidance data transmitted from the server device 30 and perform focus control and control for degrading visibility based on the guidance data.

The eyeglasses 10 and the server device 30 are realized by including storage elements such as RAM (Random Access Memory) and ROM (Read Only Memory), a storage area composed of a hard disk or an SSD (Solid State Drive), and a program control device such as a CPU (Central Processing Unit). Each function is implemented when the CPU executes a program stored in the storage area such as a hard disk.

The eyeglasses 10 include a lens controller FC, a pair of variable focus lenses LN, a gaze direction detector D1, a gaze space data acquisition unit D2, a transmission unit 11, a reception unit 12, and a storage unit 13 having a lens power model data storage unit DM. The lens controller FC further includes a guidance data acquisition unit GG, a region determination unit DR, a distance derivation unit TD, a lens power controller DC, and a scattering controller SC. The eyeglasses 10 also include various sensors (not shown) for detecting a position within a facility in which the eyeglasses system 1 is installed.

When guidance data is not acquired, the lens power controller DC of the eyeglasses 10 controls the variable focus lenses LN based on lens power model data unique to the wearer and stored in the lens power model data storage unit DM. The lens power model data is data for changing the lens power to be set in the variable focus lenses LN according to the condition and behavior of the wearer, and, for example, is data indicating the relationship between the distance to a target object to which the wearer directs attention and the "spherical power (SPH)" to be set for the variable focus lenses LN.

The distance to the target object is calculated by the distance derivation unit TD based on data detected by sensors such as the gaze direction detector D1.

The lens power model data may include two types corresponding to the SPH of both eyes, or may include six types including an "astigmatic axis (AXIS)" and "cylinder (CLY)," and these six types of lens power model data may be stored in the storage unit 13.

Next, the server device 30 includes a transmission unit 31, a reception unit 32, and a guidance data generation unit 33. The guidance data generation unit 33 of the present embodiment generates, as guidance data, data relating to a direction in which the wearer of the eyeglasses 10 should direct his or her gaze.

The guidance data generation unit 33 first determines, based on data (hereinafter also referred to as position data, etc.) indicating the position and orientation of the eyeglasses 10 transmitted from the eyeglasses 10, a target object (for example, an object moving within the facility) to which the wearer should pay attention. Then, based on the position data of the target object and the position data of the wearer (i.e., the positional relationship between them), the guidance data generation unit 33 calculates a direction in which the wearer should rotate his or her line of sight and generates guidance data indicating the gaze direction that the wearer should face. The transmission unit 31 transmits the guidance data to the eyeglasses 10.

Here, the guidance data acquisition unit GG of the eyeglasses 10 acquires the guidance data from the server device 30 via the reception unit 12, and the lens controller FC controls the refractive index distribution of the variable focus lenses LN based on the guidance data. The variable focus lenses LN are divided into a plurality of driving regions, and the refractive index distribution within the liquid crystal layer is controlled by inputting a control voltage to each driving region. The lens controller FC of the present embodiment determines, based on the guidance data, the control mode of each driving region and determines a driving region in which a Fresnel-lens-like refractive index distribution is generated and a driving region in which scattering control for degrading visibility is performed.

Specifically, the region determination unit DR of the lens controller FC determines, based on the guidance data acquired by the guidance data acquisition unit GG, a driving region corresponding to the direction in which the wearer's line of sight is to be guided as a gaze guidance region, and determines a driving region located outside the gaze guidance region as a non-guidance region.

For the driving region serving as the gaze guidance region, the control voltage determined by the lens power controller DC is applied. For the driving region serving as the non-guidance region, the control voltage determined by the scattering controller SC is applied.

Because the lens power controller DC controls the lens power of the gaze guidance region, the wearer becomes more aware of the gaze direction to be directed (the target object in that direction is more clearly recognized by the wearer because it is brought into focus, and the wearer's attention is more easily drawn to that direction). As a result, the wearer's line of sight is guided toward the direction that should be noticed or recognized, thereby providing eyeglasses 10 with improved convenience for the wearer.

Further, because the non-guidance region is subjected to scattering control by the scattering controller SC, directions other than the gaze direction to which the wearer should look become harder to see. As a result, the wearer's gaze direction is guided toward the direction that should be noticed or recognized, providing eyeglasses 10 with even greater convenience for the wearer.

<2. Variable Focus Lens>

Details of the variable focus lens LN included in the eyeglasses 10 are described below.

(2-1) Overview of the Variable Focus Lens

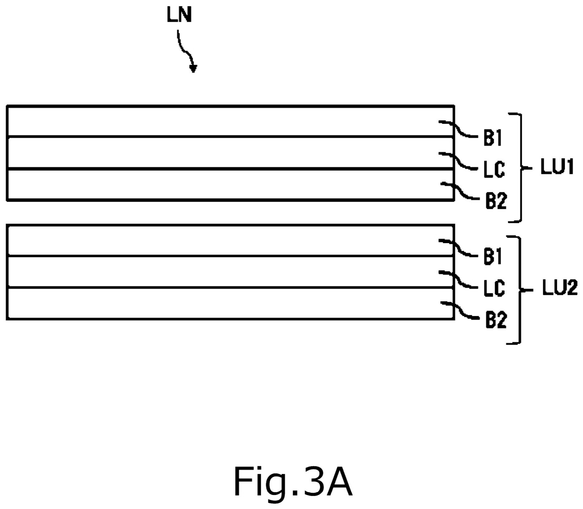

FIG. 3A is a diagram for explaining the schematic configuration of the variable focus lens LN. As shown in FIG. 3A, the variable focus lens LN includes two liquid crystal elements LU1 and LU2, which sandwich a liquid crystal layer LC between a transparent substrate B1 and a transparent substrate B2. In the two liquid crystal elements LU1 and LU2, the liquid crystal layer LC generates a sawtooth refractive index distribution when a control voltage is applied, and each functions as a Fresnel lens with a variable focal length.

The two liquid crystal elements LU1 and LU2 have alignment films in the liquid crystal layer LC oriented so that their alignment directions are orthogonal to each other, but otherwise have the same configuration. Accordingly, in the following description, the structure of the second liquid crystal element LU2 will be omitted as appropriate. Because the alignment directions of the liquid crystal layers LC in the two liquid crystal elements LU1 and LU2 are orthogonal, each of the p-polarized and s-polarized components of incident light can be refracted.

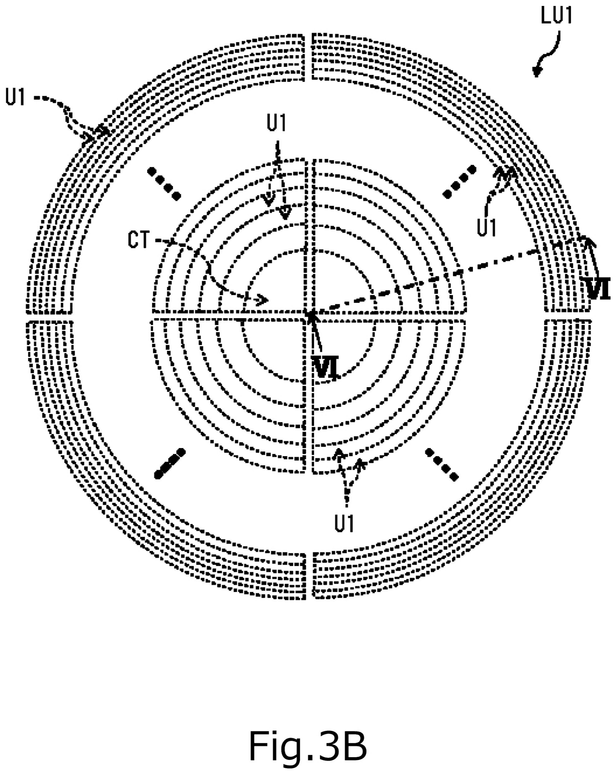

FIG. 3B is a diagram schematically illustrating the electrode arrangement of the liquid crystal element LU1. As shown in the figure, in the liquid crystal element LU1, a center electrode CT is disposed at the center, and a plurality of arcuate unit electrodes U1 are arranged concentrically around the center electrode CT. Each unit electrode U1 of the present embodiment corresponds to an annular sector shape having a central angle of approximately 90 degrees and is arranged in the radial direction within each of four sector-shaped regions having a central angle of about 90 degrees.

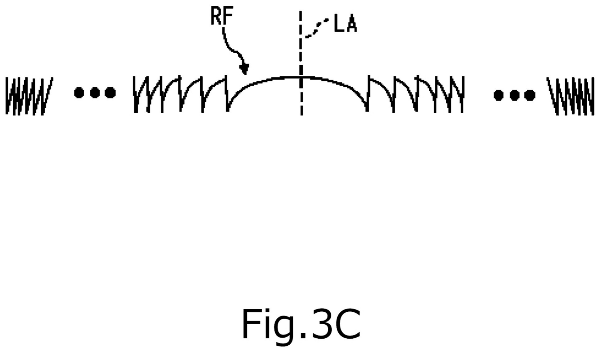

FIG. 3C is a schematic diagram illustrating a refractive index distribution RF appearing in a cross section of the liquid crystal element LU1 taken along any direction through its center shown in FIG. 3B. In the liquid crystal element LU1, when control voltages are applied to the center electrode CT and the respective unit electrodes U1, an electric field is applied to the liquid crystal layer LC, thereby a sawtooth-shaped refractive index distribution RF is generated. The refractive index distribution RF is formed to be substantially symmetrical about an optical axis LA and to have concentric undulations in plan view. The potential gradient generated at the center electrode CT and each unit electrode U1 corresponds to each undulation of the sawtooth refractive index distribution, and the liquid crystal element LU1 functions as a convex (or concave) Fresnel lens with a variable focal length. In this specification, the term "plan view" refers to a view along the direction of the optical axis LA of the liquid crystal element LU1, that is, a direction perpendicular to the transparent substrate B1.

(2-2) Unit Electrodes

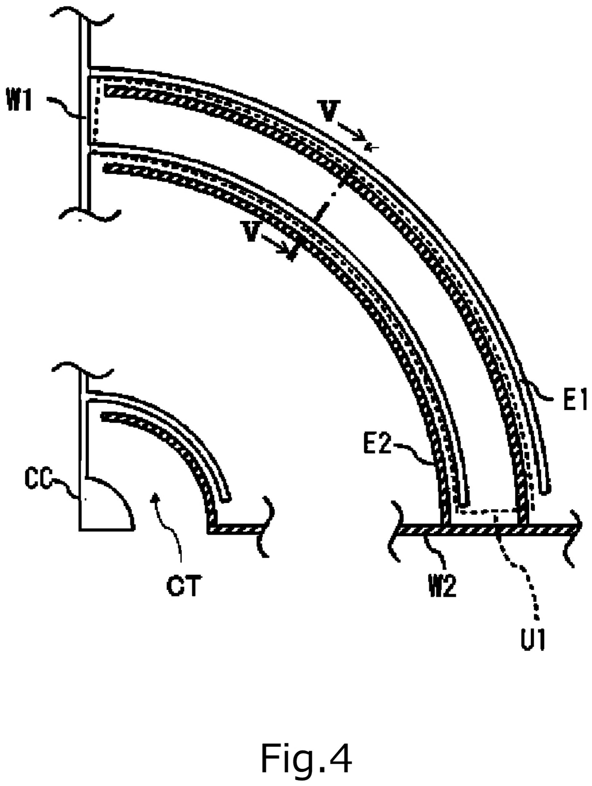

FIG. 4 is a schematic plan view for explaining the planar configuration of a single unit electrode U1. As shown in FIGS. 3B and 4, the unit electrode U1 of the present embodiment is defined in an arcuate region of approximately 90 degrees and includes a first electrode E1 and a second electrode E2 formed in a linear shape. The unit electrode U1 further has a space formed between the first electrode E1 and the second electrode E2 that is wider than the line widths of these electrodes, so that a potential gradient can be generated in the space when different voltages are applied to the first electrode E1 and the second electrode E2.

The first electrode E1 and the second electrode E2 each extend in an arcuate shape along the outer profile of each unit electrode U1 and are connected to a first lead wire W1 and a second lead wire W2, respectively, to form a comb-like shape. In two unit electrodes U1 adjacent in the radial direction, the first electrode E1 of the unit electrode U1 disposed on the outer peripheral side and the second electrode E2 of the unit electrode U1 disposed on the inner peripheral side are arranged adjacent to each other with a narrow space therebetween.

The first lead wire W1 and the second lead wire W2 extend in the radial direction and are laid between adjacent unit electrodes U1 in the circumferential direction of FIG. 3B. In the liquid crystal element LU1 of the present embodiment, lead wires other than the first lead wire W1 and the second lead wire W2 are also present in the space between adjacent unit electrodes U1 in the circumferential direction, but these are not illustrated in detail here.

Regarding the center electrode CT disposed at the center of the liquid crystal element LU1, a core electrode CC having a sector shape (or another shape such as a disk shape) is provided instead of the first electrode E1, so that a potential gradient can be generated in the region between the second electrode E2 connected to the second lead wire W2 and the core electrode CC.

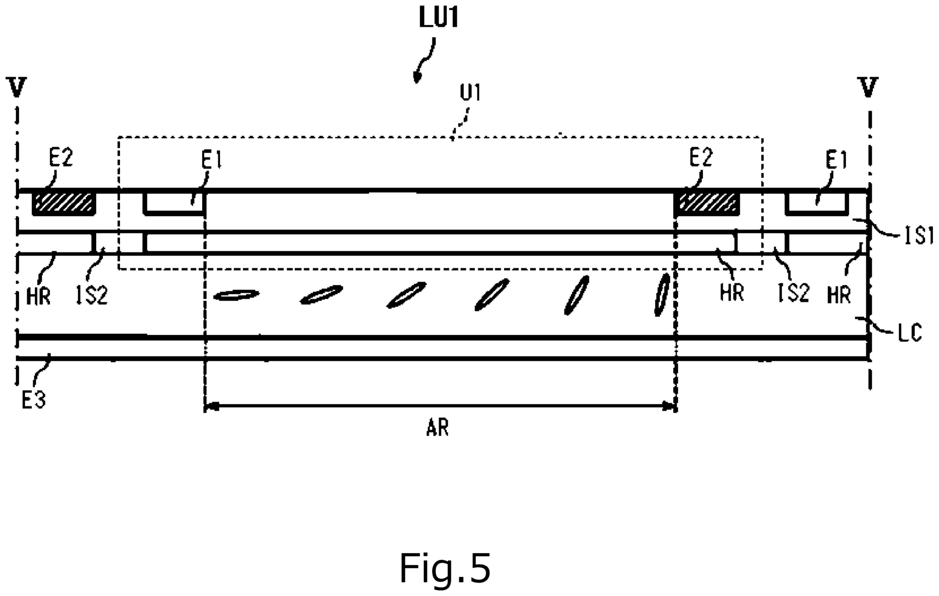

FIG. 5 is a schematic diagram for explaining a sectional view taken along line V-V in FIG. 4, with some components omitted for simplicity. The V-V section in FIG. 4 is a radial cross section passing through a position corresponding to the center of the concentric arrangement of the unit electrodes U1. Hereinafter, with reference to FIG. 5, the structure of the unit electrode U1 and the potential distribution applied to the liquid crystal layer LC by the unit electrode U1, as well as the refractive index distribution caused by the potential distribution, will be described in more detail.

In FIG. 5, the liquid crystal layer LC is sandwiched between the upper substrate (the transparent substrate B1 in FIG. 3A) and the lower substrate (the transparent substrate B2 in FIG. 3A). The former substrate is formed by laminating, on a glass substrate (not shown in FIG. 5), the first electrode E1, the second electrode E2, an insulating layer IS1, a resistive layer HR, and an insulating layer IS2, while the latter substrate is formed by laminating, on a glass substrate (not shown in FIG. 5), a counter electrode E3.

In the transparent substrate B1, the first electrode E1 and the second electrode E2 are formed on the glass substrate, and the insulating layer IS1 is further laminated so as to embed the first electrode E1 and the second electrode E2. The resistive layer HR is laminated on the insulating layer IS1, and the insulating layer IS2 is further disposed to fill the gaps in the resistive layer HR. In the transparent substrate B2, the counter electrode E3 is formed on the glass substrate. The transparent substrates B1 and B2 have parallel alignment films that are antiparallel at the interface of the liquid crystal layer LC, but these are not shown for simplicity.

The liquid crystal layer LC is, for example, a nematic liquid crystal. In an electric-field-free environment where no voltage is applied from the first electrode E1 and the second electrode E2, the liquid crystal orientation is homogeneous, and the liquid crystal is colorless and transparent. The thickness of the liquid crystal layer LC in the present embodiment is preferably 5 $\mu$m or more and 30 $\mu$m or less.

The first electrode E1 and the second electrode E2 are formed at both ends of the unit electrode U1 from a transparent conductive film such as indium tin oxide (ITO). As shown in FIG. 3, a region AR in the unit electrode U1 is defined by the space between the first electrode E1 and the second electrode E2 and is interposed between the first electrode E1 and the second electrode E2. The width of the region AR is greater than the line width of the first electrode E1 and the second electrode E2.

The insulating layer IS1 is a transparent electrical insulator and is formed, for example, of silicon dioxide ($SiO_2$). In the present embodiment, the insulating layer IS1 is laminated so as to embed the first electrode E1, the second electrode E2, the first lead wire W1, the second lead wire W2, and other components. The insulating layer IS2 is laminated to fill the gaps in the resistive layer HR formed on the insulating layer IS1. The insulating layer IS2 may be formed by embedding the resistive layer HR with silicon dioxide, similar to the insulating layer IS1, or may be formed by an alignment film extending along the interface of the liquid crystal layer LC that embeds the resistive layer HR.

The resistive layer HR has an electrical resistivity higher than that of the first electrode E1 and the second electrode E2 and lower than that of the insulating layer IS1 formed of silicon dioxide, and is composed of a transparent film such as zinc oxide (ZnO). The sheet resistance of the resistive layer HR is greater than the sheet resistance of the first electrode E1 and the second electrode E2 and smaller than that of the insulating layer IS1. The sheet resistance of a material is defined as the electrical resistivity of the material divided by its thickness. The electrical resistivity of the resistive layer HR is preferably 1 $\Omega \cdot$m or more, and the sheet resistance is preferably in the range of $1 \times 10^2\ \Omega/\square$ to $1 \times 10^{11}\ \Omega/\square$.

In the present embodiment, the resistive layer HR is included in the unit electrode U1 and has an arcuate planar shape slightly narrower than the width of the unit electrode U1, and is formed so as to be separated from the resistive layers HR of adjacent unit electrodes U1. Preferably, the resistive layer HR is formed so as to be electrically isolated from the resistive layers HR of other unit electrodes U1. The resistive layer HR is disposed, in plan view, in a region AR between the first electrode E1 and the second electrode E2. Preferably, as shown in FIG. 5, the resistive layer HR overlaps at least a part of the first electrode E1 and extends between the first electrode E1 and the second electrode E2 so as to overlap at least a part of the second electrode E2, although it is not limited to this configuration.

As shown in FIGS. 4 and 5, the first electrode E1 of the unit electrode U1 is formed along the second electrode E2 of an adjacent unit electrode U1, and the second electrode E2 of the unit electrode U1 is formed along the first electrode E1 of an adjacent unit electrode U1. An insulating layer IS1 is disposed at the boundary between the first electrode E1 of the unit electrode U1 and the second electrode E2 of the adjacent unit electrode U1 and between the second electrode E2 of the unit electrode U1 and the first electrode E1 of the adjacent unit electrode U1, and the resistive layers HR between adjacent unit electrodes are separated by the insulating layer IS2.

In the present embodiment, as shown in FIGS. 4 and 5, the boundary of the unit electrode U1 is defined at the center of the insulating layer IS1 interposed between unit electrodes U1 adjacent in the radial direction. The unit electrode U1, the first electrode E1, the second electrode E2, and the resistive layer HR included therein each extend in the circumferential direction of the concentric circles and are formed in an arcuate shape. The widths of these elements correspond to the radial thickness of the concentric circles.

The width of the insulating layer IS1 interposed between two unit electrodes U1 adjacent in the radial direction is preferably 15 $\mu$m or less and 5 $\mu$m or more, and may be made narrower depending on the distance from the optical axis LA of the liquid crystal element LU1.

The counter electrode E3 is formed as a planar shape on the transparent substrate B2 with a transparent conductive film such as indium tin oxide (ITO). A ground potential (0 V) is supplied to the counter electrode E3 in the present embodiment.

(2-3) Refractive Index Distribution of the Unit Electrode

Next, with reference to FIG. 5, a description will be given of the potential distribution and the refractive index distribution in the liquid crystal layer LC caused by the unit electrode U1.

First, a first voltage V1 is supplied to the first electrode E1 through the first lead wire W1 by input from a controller (not shown) of the liquid crystal element LU1. Similarly, a second voltage V2 is supplied to the second electrode E2 from the controller through the second lead wire W2. In the present embodiment, the first voltage V1 and the second voltage V2 are alternating-current voltages having a rectangular waveform with the same frequency and phase, but they are not limited thereto. For example, the maximum amplitude of the first voltage V1 and the second voltage V2 may be set to 10 V or less, and the frequency may be set to, for example, 10 Hz or more and 1 kHz or less.

When the first voltage V1 and the second voltage V2 differ from each other and the effective value of the second voltage V2 is higher than that of the first voltage V1, the liquid crystal molecules change from a state parallel to the transparent substrate B1 to a state standing upright, from the side of the first electrode E1 (low potential side) toward the side of the second electrode E2 (high potential side), as shown in FIG. 5. Specifically, the liquid crystal layer LC is interposed between the first electrode E1 and the second electrode E2 and the counter electrode E3, and a resistive layer HR is disposed between the first electrode E1 and the second electrode E2 in plan view. As a result, a potential distribution is generated such that the potential gradually transitions from the second voltage V2 of the second electrode E2 to the first voltage V1 of the first electrode E1. This generates a refractive index gradient in the liquid crystal layer LC at each unit electrode U1. Furthermore, the refractive index gradient generated in the liquid crystal layer LC varies according to the width of the region AR of the unit electrode U1 and tends to become steeper as the width decreases.

(2-4) Arrangement of Unit Electrodes

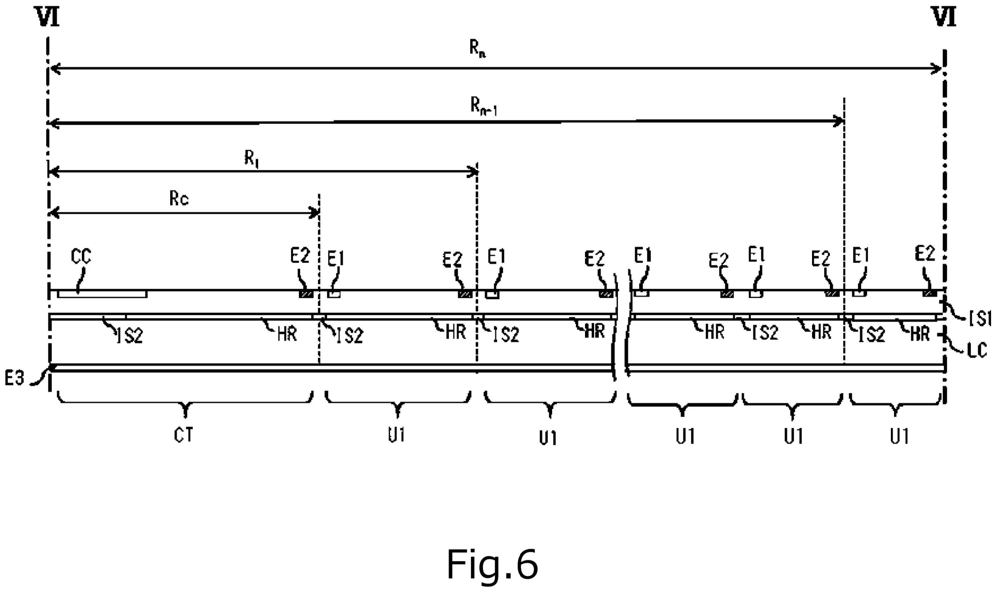

FIG. 6 shows a cross-sectional view taken along line VI-VI in FIG. 3B, which is a radial cross section passing near the optical axis of the liquid crystal element LU1. A center electrode CT, which includes a core electrode CC, is disposed at the center of the liquid crystal element LU1, and unit electrodes U1 are arranged in series in the radial direction around the center electrode CT. In this specification, the boundary between the center electrode CT and the unit electrode U1 is defined at the center of the insulating layer IS1 interposed therebetween, and the radius Rc of the center electrode CT corresponds to the distance from the optical axis of the liquid crystal element LU1 (a position corresponding to the center of the concentric arrangement of the unit electrodes U1) to the boundary.

As shown in FIG. 6, the radius of each unit electrode U1 is denoted by Rn, where the subscript n is an integer from 1 to N assigned in ascending order from the unit electrode having the smallest radius to the unit electrode having the largest radius among the plurality of unit electrodes U1. The value of N may be, for example, 50 or 60, or may be a larger number if the variable focus lens LN is to have a larger aperture. As also shown in the figure, the magnitude of the radius of each unit electrode U1 corresponds to the distance from the optical axis of the liquid crystal element LU1 to the boundary on the outer peripheral side (the second electrode E2 side) of the unit electrode U1.

The radius Rn of the unit electrode U1 in the present embodiment is expressed by the following formula (1).

[Formula 1]

$$R_n = (n+1)^{1/2} \times R_c \quad \cdots \quad (1)$$

(2-5) Lead Wires

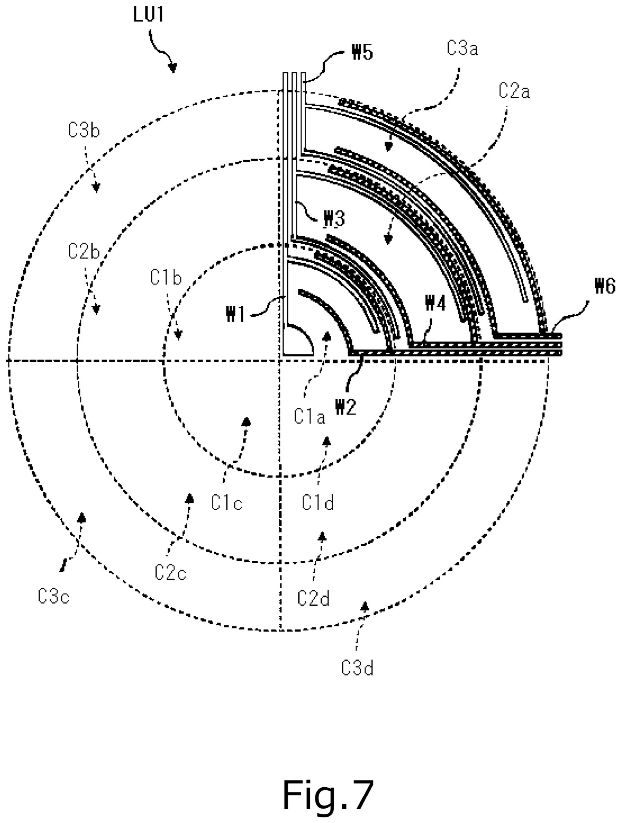

Next, with reference to FIG. 7, a description will be given of the lead wires connected to the unit electrodes U1. In the liquid crystal element LU1 according to the present embodiment, a plurality of unit electrodes U1 are divided into several unit-electrode groups, and a plurality of pairs of lead wires are provided for input to the first electrode E1 and the second electrode E2 so that input to different unit-electrode groups can be individually controlled.

As shown in FIG. 7, the liquid crystal element LU1 includes a plurality of driving regions C1a to C1d, C2a to C2d, and C3a to C3d, which together form twelve regions. Each driving region corresponds to a region within a predetermined range of distance from the optical axis LA.

Specifically, the driving regions C1a to C1d correspond to four sector-shaped regions each having a central angle of approximately 90 degrees. Similarly, the driving regions C2a to C2d and C3a to C3d each correspond to four annular-band-shaped regions having a central angle of approximately 90 degrees and a thickness in the radial direction. As also shown in FIG. 7, the driving regions C1a, C2a, and C3a are arranged in order of increasing distance from the optical axis LA of the liquid crystal element LU1, and the same applies to the driving regions C1b, C2b, C3b, and so on.

The plurality of unit electrodes U1 in the liquid crystal element LU1 each belong to one of the driving regions, and in each group of unit electrodes belonging to a driving region, the input to the first electrode E1 is common and the input to the second electrode E2 is also common.

As shown in FIG. 7, the group of first electrodes E1 of the unit electrodes U1 belonging to the driving region C1a is connected to the first lead wire W1, and the group of second electrodes E2 is connected to the second lead wire W2. As a result, the group of first electrodes E1 and the first lead wire W1, and the group of second electrodes E2 and the second lead wire W2, have a comb-like structure and are arranged to be nested with each other. Similarly, the group of first electrodes E1 of the unit electrodes belonging to the driving region C2a is connected to the third lead wire W3, and the group of second electrodes E2 is connected to the fourth lead wire W4. The group of first electrodes E1 of the unit electrodes belonging to the driving region C3a is connected to the fifth lead wire W5, and the group of second electrodes E2 is connected to the sixth lead wire W6.

Although not all are illustrated in FIG. 7, the lead wires W1, W3, and W5 also extend toward the center where the core electrode CC is disposed from the directions of 180 degrees, 270 degrees, and 0 degrees in the figure, respectively, and the lead wires W2, W4, and W6 extend toward the center where the core electrode CC is disposed from the directions of 90 degrees, 180 degrees, and 270 degrees, respectively. In the driving regions C1b to C1d, C2b to C2d, and C3b to C3d, the group of first electrodes E1 is similarly connected to the lead wires W1, W3, and W5, and the group of second electrodes E2 is similarly connected to the lead wires W2, W4, and W6, as in the case of the driving regions C1a, C2a, and C3a.

To each of the plurality of driving regions C1a to C1d, C2a to C2d, and C3a to C3d in the present embodiment, a control voltage from the controller of the eyeglasses 10 is applied through the connected lead wires.

<3. Configuration and Control of the Eyeglasses 10>

The following provides a more detailed description of the configuration of the eyeglasses 10 and the processing of the lens controller FC with reference to FIGS. 1 and 2 and the like.

(3-1) Sensors of the Eyeglasses 10

The following describes the various sensors included in the eyeglasses 10.

The gaze direction detector D1 is configured to include a sensor that acquires data relating to the user's line of sight. In the present embodiment, the gaze direction detector D1 is disposed on the pair of rims 101 and includes, for example, a light source such as an LED (Light Emitting Diode) and an imaging unit such as a camera, thereby detecting the wearer's eye movement and gaze direction. The gaze direction detector D1 is used for eye tracking to detect eye movement and gaze direction, and may employ a non-contact type sensor such as a corneal reflection method, or a contact-type sensor such as an electrooculography method. Both non-contact and contact-type sensors may also be employed together as the gaze direction detector D1, and the configuration is not particularly limited.

Next, the gaze space data acquisition unit D2 is configured to include a sensor for acquiring data about the state of the space within the wearer's field of view and is disposed on the bridge 105. In the present embodiment, a LiDAR (Light Detection and Ranging) sensor is used as the gaze space data acquisition unit D2; however, the invention is not limited thereto, and a depth camera or other device capable of acquiring three-dimensional data may also be used.

Furthermore, the temple 103 or the casing CS of the eyeglasses 10 includes sensors (not shown in FIGS. 1 and 2) for detecting the wearer's behavior as well as the position and orientation of the eyeglasses 10. Such sensors may include, for example, a six-axis sensor, a GPS sensor, or other sensors for detecting position and orientation.

(3-2) Processing of the Lens Controller FC Based on Guidance Data

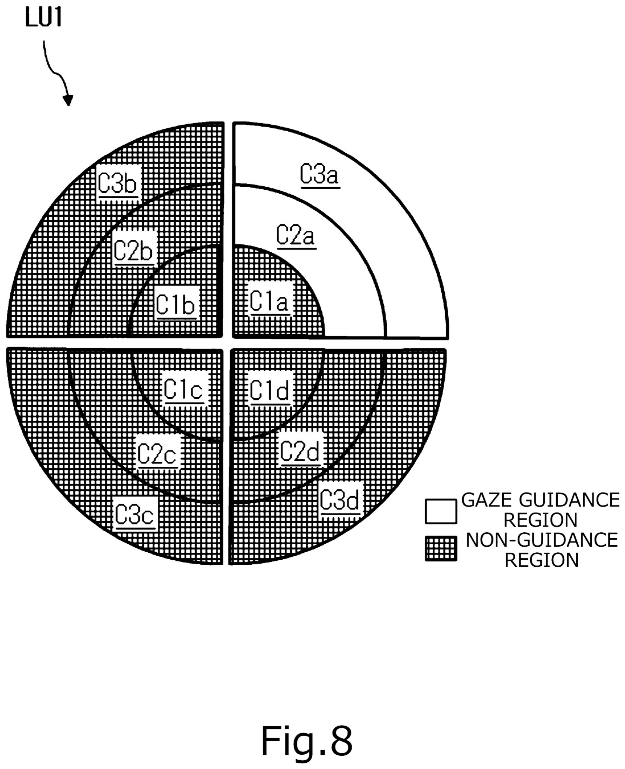

FIG. 8 is a diagram illustrating how the liquid crystal element LU1 is controlled based on the guidance data.

The figure shows an example in which the region determination unit DR of the lens controller FC determines, based on the guidance data, that the driving regions C2a and C3a in the upper right of the figure are the gaze guidance regions. The region determination unit DR further determines the other driving regions C1a-C1d and C2b-C2d and C3b-C3d, excluding driving regions C2a and C3a, as non-guidance regions. The lens controller FC outputs to the liquid crystal element LU1 the input voltages corresponding to the gaze guidance regions and non-guidance regions of each driving region C1a-C3d, thereby controlling the refractive index distribution within the liquid crystal layer LC.

The following provides a detailed description of the control of each driving region determined as a gaze guidance region or a non-guidance region.

The control voltage for the driving regions C2a and C3a, which are determined as gaze guidance regions, is output by the lens power controller DC. The lens power controller DC executes control to form a focal point by determining the lens power to be generated in the driving regions C2a and C3a based on the lens power model data and the data indicating the distance to the object that the wearer should focus on. The lens power controller DC outputs the control voltage necessary to generate a Fresnel lens-shaped refractive index distribution within the portion of the liquid crystal layer LC corresponding to the driving regions C2a and C3a. The distance derivation unit TD calculates the distance to the object that should be focused on. Specifically, this distance is derived, for example, as the distance to an object located on the extension line of the wearer's gaze direction when the gaze is shifted to the driving regions C2a and C3a, based on three-dimensional point cloud data acquired by the gaze space data acquisition unit D2. Note that the object located on the extension line of the gaze direction when the gaze is shifted may also be specified by applying certain criteria.

The scattering controller SC outputs a control voltage to the driving regions to place them in a low-visibility state. Specifically, the scattering controller SC outputs a control voltage such that incident light in the driving regions C1a-C1d, C2b-C2d, and C3b-C3d, which are determined as non-guidance regions, is scattered.

The term "low-visibility state" of a driving region refers, for example, to a state in which scattering or diffusion occurs within the group of unit electrodes U1 belonging to the driving region, thereby expanding the focusing range and causing defocus (a deterioration in lens image quality). A state in which scattering or diffusion becomes dominant in the driving region such that no focal point is formed is also included in the low-visibility state.

Examples of the control (scattering control) by the scattering controller SC for causing such a deterioration in visibility include: inputting voltages to the first electrode E1 and the second electrode E2 of each unit electrode U1 belonging to the driving region corresponding to the non-guidance region, where the voltages are phase-shifted to a certain degree; or setting the frequency of the voltage applied to one of the electrodes (the low-potential side) higher than the frequency of the voltage applied to the other electrode (the high-potential side). Furthermore, this may also be realized by inputting high-frequency voltages of 50 kHz or higher to both the first electrode E1 and the second electrode E2. By doing so, the potential gradient formed in the space between the first electrode E1 and the second electrode E2 becomes disturbed, thereby deteriorating the visibility in the driving regions corresponding to the non-guidance regions. It is also possible to realize the scattering control by temporally varying the input to the driving regions.

(3-3) Processing Flow of the Lens Controller FC

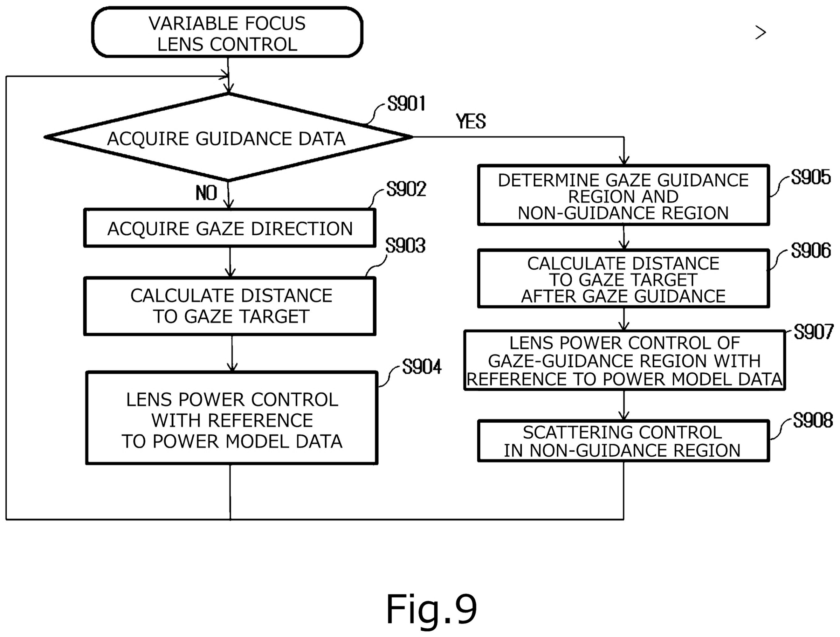

FIG. 9 is a diagram illustrating the flow of the control processing of the variable focus lens LN of the eyeglasses 10.

First, the lens controller FC determines whether the guidance data acquisition unit GG has acquired guidance data via the receiving unit 12 (S901). If the guidance data has not been acquired (NO in S901), the process proceeds to steps S902 to S904, in which lens power control is performed based on the detection of the wearer's gaze direction (hereinafter referred to as the "detection control mode").

On the other hand, if the guidance data has been acquired in S901 (YES in S901), the process proceeds to steps S905 to S908, in which the variable focus lens LN is controlled based on the guidance data (hereinafter referred to as the "guidance control mode").

In the detection control mode, in step S902, the wearer's gaze direction detected by the gaze direction detector D1 is acquired. In step S903, the distance to the object that the wearer is focusing on is further obtained based on the detected gaze direction.

In step S903, the distance derivation unit TD derives the distance to the object of gaze based on the gaze direction of at least one of the wearer's eyes. Specifically, by identifying a point of interest in the three-dimensional point cloud data acquired by the gaze space data acquisition unit D2 from the detected gaze direction, the distance to the object of gaze can be derived. Alternatively, the distance derivation unit TD may derive the distance based on the convergence angle calculated from the gaze directions of both eyes of the wearer, or the distance may be derived by triangulation using sensors included in the eyeglasses 10, without particular limitation.

In step S904, the lens power controller DC refers to the lens power model data stored in the lens power model data storage unit DM and outputs control voltages to the driving regions C1a-C3d such that the lens power corresponds to the distance to the object of gaze derived by the distance derivation unit TD. In this manner, when the guidance data is not acquired, the variable focus lens LN is controlled accordingly. Note that in the storage unit 13, data associating lens power values with control voltages is stored for each driving region. In steps S904 and S907 (described later), the lens power controller DC outputs the control voltage by referencing the associated data.

In the guidance control mode, in step S905, the region determination unit DR determines, for each of the driving regions C1a-C3d, whether it should be a gaze guidance region or a non-guidance region.

Here, steps S906 and S907 correspond to the lens power control processing of the driving regions determined as gaze guidance regions, while step S908 corresponds to the scattering control processing of the driving regions determined as non-guidance regions. In step S906, the distance derivation unit TD calculates the distance to the object of gaze expected after the wearer's gaze has been guided. The calculation in step S906 is, for example, a calculation in which, among three-dimensional point cloud data acquired by the gaze space data acquisition unit D2, three-dimensional point cloud data for which a gaze-guidance region (one or more driving regions) determined by the region determination unit DR is interposed between the rotation point of the wearer's eye and the three-dimensional point cloud data is selected, and an average distance of the selected three-dimensional point cloud data (or a distance calculated based on a group of representative points extracted according to some criterion) is derived.

In step S907, the lens power controller DC outputs a control voltage to the driving region corresponding to the gaze-guidance region, using a distance to a gaze target assumed after the gaze guidance, which is output in step S906, and lens power model data stored in the lens power model data storage unit DM. As a result, in the gaze guidance regions, lens power control corresponding to the distance to the object of gaze after gaze guidance is executed.

In step S908, the scattering controller SC outputs control voltages to the driving regions corresponding to the non-guidance regions determined in step S905, thereby executing control to reduce visibility in the non-guidance regions.

By controlling the non-guidance regions so that their visibility is lower than that of the gaze guidance regions, the wearer's gaze is more easily guided. It should be noted that each of the driving regions C1a-C3d has lower visibility when controlled by the scattering controller SC than when controlled by the lens power controller DC to form a focal point (steps S904 or S907).

After the processing of step S904 or S908 is completed, the process returns to step S901 to determine again whether the guidance data has been acquired (i.e., whether valid guidance data has been obtained). Depending on changes in the wearer's gaze, posture, or other conditions, the validity of the previously acquired guidance data is determined (for example, based on whether the wearer's gaze direction coincides with the direction to be guided or not). Then, either the processing of steps S902 to S904 or the processing of steps S905 to S908 is selectively executed. Even when the wearer's gaze or other conditions change, the guided control mode may be continuously maintained for a predetermined period, for example.

<4. First Modification of Eyeglasses 10>

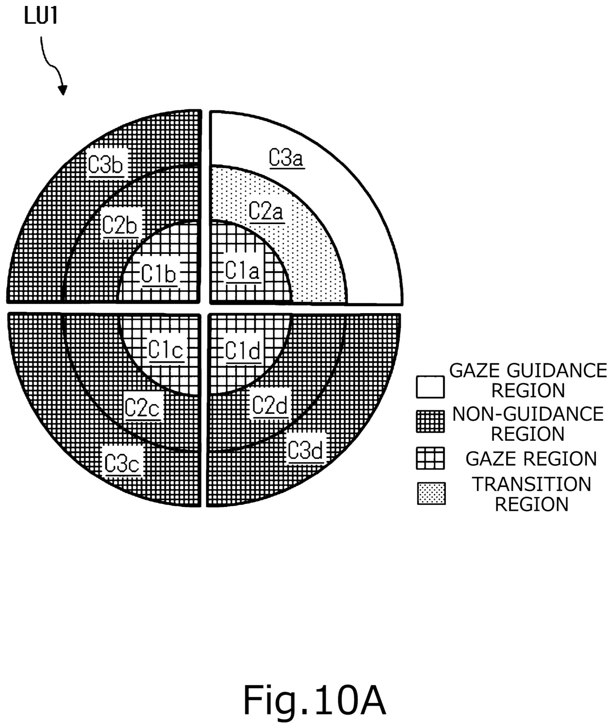

FIG. 10A is a diagram illustrating the control of the driving regions C1a-C3d by the lens controller FC in the first modification of the eyeglasses 10.

In FIG. 10A, based on the guidance data, the region determination unit DR determines the driving region C3a at the upper right of the figure as the gaze guidance region. Furthermore, the region determination unit DR determines six driving regions C2b-C2d and C3b-C3d as non-guidance regions, four driving regions C1a-C1d as a gaze region, and the driving region C2a as a transition region.

The region determination unit DR determines the driving regions corresponding to the gaze region based on the wearer's current gaze direction detected by the gaze direction detector D1. In the case of FIG. 10A, the region determination unit DR determines the four central driving regions C1a-C1d of the liquid crystal element LU1 as the gaze region. The region determination unit DR further determines the driving region C2a, which is located between the gaze guidance region and the gaze region, as the transition region.

The driving regions C1a-C1d corresponding to the gaze region are scattering-controlled so that their visibility is worse than that of the driving region C3a corresponding to the gaze guidance region but better than that of the driving regions C2b-C2d and C3b-C3d corresponding to the non-guidance regions. The driving region C2a corresponding to the transition region is scattering-controlled so that its visibility is worse than that of the driving region C3a corresponding to the gaze guidance region but better than that of the driving regions C1a-C1d corresponding to the gaze region. In this manner, as approaching the gaze guidance region, visibility improves, thereby making it easier to guide the wearer's gaze.

The scattering controller SC may periodically switch between a period in which scattering is intentionally not generated and a period in which scattering is intentionally generated, and to control the degree of visibility by changing the ratio between the former period and the latter period. In this case, a state in which scattering is not dominant and a state in which scattering is dominant are alternately repeated, resulting in control in which the refractive index of the portion corresponding to the driving region oscillates between a state of good visibility and a state of poor visibility. The control of visibility by the scattering controller SC is not limited to this mode and may alternatively be performed by varying the phase or frequency of the input voltages applied to the first electrode E1 and the second electrode E2.

When good visibility and poor visibility are alternately repeated in the gaze region, the wearer's attention is more likely to be directed outward from the gaze region, thereby making the gaze direction easier to guide. The driving regions corresponding to the non-guidance regions may also be controlled so that good visibility and poor visibility are alternately repeated. The state of good visibility may be either a state having lens power or a state without lens power, and may be controlled so as to have the same lens power as the driving region corresponding to the gaze guidance region.

When good visibility and poor visibility are periodically alternated in the gaze region and the transition region, gaze guidance may be achieved by repeatedly controlling the poor visibility state to expand from the gaze region toward the transition region. Alternatively, gaze guidance may also be achieved by repeatedly controlling the good visibility state to expand from the gaze guidance region.

The eyeglasses 10 of the first modification are substantially the same as the eyeglasses 10 of the first embodiment, except that the region determination unit DR further determines the gaze region and the transition region and these regions are controlled as described above. The description of aspects that are substantially the same as those of the eyeglasses 10 of the first embodiment is omitted as appropriate.

<5. Second Modification of Eyeglasses 10>

Next, the lens controller FC of the second modification of the eyeglasses 10 according to the first embodiment will be described. The eyeglasses 10 of the second modification include multiple modes (multiple types of guidance control modes) in which the control scheme of the variable focus lens LN based on guidance data differs, and the lens controller FC further includes switching means for switching between the guidance control modes.

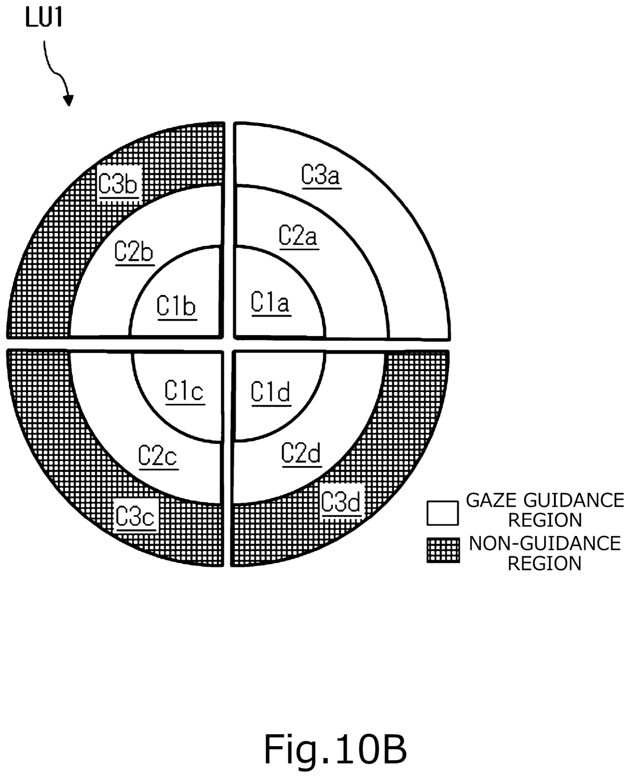

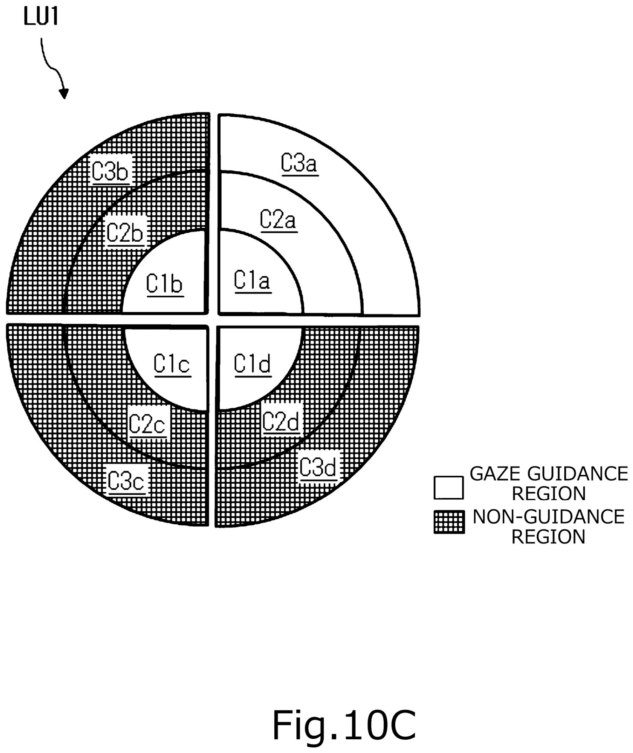

FIGS. 10B and 10C are diagrams illustrating the control of the driving regions C1a-C3d according to two guidance control modes in the second modification of the eyeglasses 10. FIG. 10B illustrates control in the first guidance control mode, and FIG. 10C illustrates control in the second guidance control mode. As shown in these figures, since the non-guidance region is wider (and the gaze guidance region is narrower) in FIG. 10C than in FIG. 10B, the second guidance control mode makes it easier to guide the wearer's gaze.

The eyeglasses 10 further include means for detecting the wearer's eye movement (which may be the sensor of the gaze direction detector D1 that captures gaze behavior, or may be an electrooculography (EOG) sensor provided on the nose pad NP, for example), and the lens controller FC switches between the guidance control modes based on the eye movement.

The switching of the guidance control mode may be performed, for example, when a change in eye movement exceeding a predetermined level is detected, based on the eye movement observed during a predetermined period such as at the start of wearing. When blinking becomes frequent or when the degree of convergence or divergence insufficiency/excess increases, the mode may be switched to a mode in which gaze guidance is more easily performed. Further, the degree of eye fatigue of the wearer may be evaluated, and the mode may be switched to a mode that facilitates gaze guidance according to the result of the evaluation. The mode may also be switched to a mode that facilitates gaze guidance according to the tendency of the wearer's fixation duration or the frequency of change in the wearer's gaze direction.

The eyeglasses 10 of the second modification are substantially the same as the eyeglasses 10 of the first embodiment, except that they include multiple guidance control modes as described above. The description of aspects that are substantially the same as those of the eyeglasses 10 of the first embodiment is omitted as appropriate.

<6. Third Modification of Eyeglasses 10>

Next, the third modification of the eyeglasses 10 according to the first embodiment will be described. The variable focus lens LN of the first embodiment includes two liquid crystal elements LU1 and LU2 whose alignment directions are orthogonal. In contrast, the variable focus lens LN of the third modification is composed of four liquid crystal elements, namely two liquid crystal elements that generate linear Fresnel lens-like refractive index distributions in the vertical and horizontal directions, respectively, and two additional liquid crystal elements that are substantially identical except that their alignment directions are orthogonal to the former two. In the following description, explanation of the latter two liquid crystal elements (the two elements that are substantially identical except for the orthogonal alignment direction) will be omitted as appropriate (the same applies to the fourth modification).

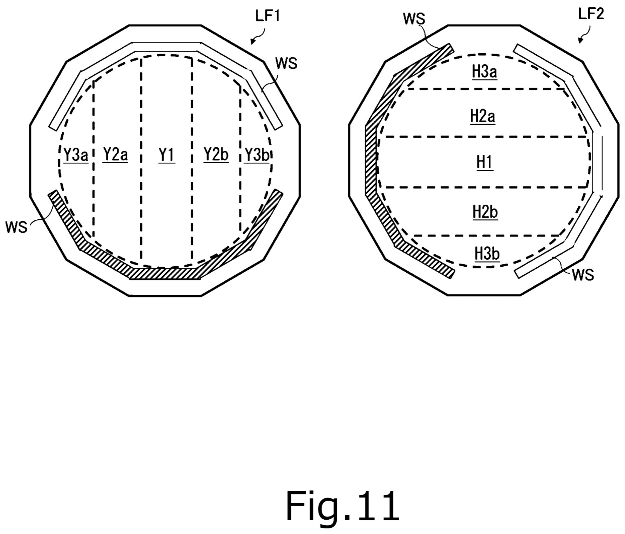

FIG. 11 is a diagram schematically illustrating the liquid crystal elements LF1 and LF2 according to the third modification.

The liquid crystal element LF1 of the third modification has unit electrodes formed linearly in the vertical direction in the figure, and the liquid crystal element LF2 has unit electrodes formed linearly in the horizontal direction in the figure. In both cases, the widths of the unit electrodes become narrower as they are positioned farther from the center (see FIG. 6). The variable focus lens LN of the third modification is configured by superimposing the liquid crystal elements LF1 and LF2, each of which generates a linear Fresnel lens-like refractive index distribution, thereby enabling the generation of a concentric Fresnel lens-like refractive index distribution, similar to the liquid crystal element LU1.

As shown in FIG. 11, the liquid crystal element LF1 has driving regions Y1, Y2a, Y2b, Y3a, and Y3b, and different control voltages are supplied to each driving region from a lead wiring region WS. Similarly, the liquid crystal element LF2 has driving regions H1, H2a, H2b, H3a, and H3b, and different control voltages are supplied to each driving region from a lead wiring region WS.

Each lead wiring region WS includes five lead wirings corresponding to the five driving regions; however, the lead wirings are omitted from illustration in FIG. 11. The lower lead wiring region WS of the liquid crystal element LF1 and the left lead wiring region WS of the liquid crystal element LF2 are portions in which five lead wirings connected to the second electrodes E2 are arranged. The upper lead wiring region WS of the liquid crystal element LF1 and the right lead wiring region WS of the liquid crystal element LF2 are portions in which five lead wirings connected to the first electrodes E1 are arranged.

In the third modification, the region determination unit DR determines the gaze guidance region, the non-guidance region, and the like based on the guidance data acquired by the guidance data acquisition unit GG. For example, when the wearer's gaze is to be guided upward to the right based on the guidance data, the driving regions Y2b, Y3b, H2a, and H3a are determined as the gaze guidance region, and the lens controller FC generates linear Fresnel lens-like refractive index distributions in these regions. The region determination unit DR determines the remaining driving regions Y1, Y2a, Y3a, H1, H2b, and H3b as the non-guidance region, and the scattering controller SC controls these regions so that visibility is degraded compared with the gaze guidance region. Note that in the third modification, the control of the gaze region and the transition region, as in the first modification, may also be applied.

The eyeglasses 10 of the third modification differ from the eyeglasses 10 of the first embodiment in that the liquid crystal elements LF1 and LF2 constituting the variable focus lens LN have the above-described configuration. Apart from this point, the eyeglasses 10 of the third modification are substantially the same as the eyeglasses 10 of the first embodiment. Description of the aspects substantially the same as those of the eyeglasses 10 of the first embodiment will be omitted as appropriate.

<7. Fourth Modification of Eyeglasses 10>

Next, the fourth modification of the eyeglasses 10 according to the first embodiment will be described. The variable focus lens LN of the fourth modification, similar to the case of the third modification, is composed of four liquid crystal elements: two liquid crystal elements that generate linear Fresnel lens-like refractive index distributions in the vertical and horizontal directions, respectively, and two additional liquid crystal elements that have the same configuration except that their alignment directions are orthogonal to those of the former two.

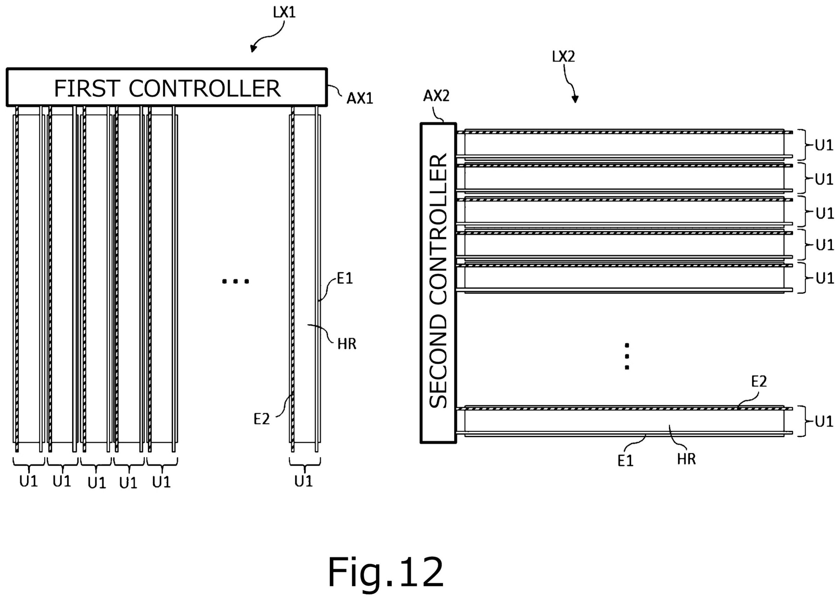

FIG. 12 is a diagram schematically illustrating the liquid crystal elements LX1 and LX2 according to the fourth modification. In the liquid crystal elements LX1 and LX2, a plurality of unit electrodes U1 (for example, 200) are arranged so as to extend linearly with the same width (for example, 150 $\mu$m). The first controller AX1 and the second controller AX2 generate linear Fresnel lens-like refractive index distributions in which the optical axis position is variable by individually setting control voltages for each of the unit electrodes U1. Specifically, since the first controller AX1 and the second controller AX2 input two types of voltages, one for the first electrode E1 and the other for the second electrode E2, into each of the 200 unit electrodes U1, they output 400 control voltages in total.

In the fourth modification, each individual unit electrode U1 corresponds to a single driving region. The region determination unit DR of the fourth modification, similar to the case of the first embodiment, determines the gaze guidance region, the non-guidance region, and the like based on the guidance data acquired by the guidance data acquisition unit GG. For example, when the wearer's gaze is to be guided upward to the right based on the guidance data, the region determination unit DR determines that a plurality of unit electrodes U1 located on the right-hand side in FIG. 12 of the liquid crystal element LX1, and a plurality of unit electrodes U1 located on the upper side in FIG. 12 of the liquid crystal element LX2, correspond to the gaze guidance region, and generates Linear Fresnel lens-like refractive index distributions, in which the optical axis extends vertically and horizontally, in these unit electrodes U1. The remaining unit electrodes U1 of the liquid crystal elements LX1 and LX2 are determined to correspond to the non-guidance region, and are controlled so that visibility is degraded compared with the gaze guidance region.

The eyeglasses 10 of the fourth modification differ from the eyeglasses 10 of the third modification in the points described above; apart from these, they are substantially the same as the eyeglasses 10 of the third modification. Description of the aspects substantially the same as those of the eyeglasses 10 of the third modification will be omitted as appropriate.

<8. Others>

In the first embodiment and the like, as shown in the flow of FIG. 9, the detection control mode and the guidance control mode are switched according to whether guidance data is available. However, it may alternatively be configured such that the switching is performed according to the wearer's intention. Specifically, the lens controller FC may have means for switching between the guidance control mode and the detection control mode, and the wearer may perform the switching operation by an operation device separately provided on the eyeglasses 10.

In the eyeglasses 10 of the first embodiment and the like, as in the case of the second modification, means for detecting the wearer's eye movement may be provided, and the guidance control mode and the detection control mode may be switched according to the eye movement.

In the eyeglasses 10 of the first embodiment and the like, the guidance data to be acquired is generated by the server device 30 installed in the facility and then received. However, the invention is not limited to such an aspect. For example, the position data in the facility of the object to be attended by the wearer may be transmitted from the server device, and the guidance data acquisition unit GG may generate guidance data based on the position data and position data acquired from position sensors of the eyeglasses 10 and the like, thereby acquiring the guidance data.

The eyeglasses system 1 of the first embodiment and the like is not limited to a system installed in a facility, and may also be one in which the server device 30 and the eyeglasses 10 are connected via an Internet line. Such an eyeglasses system 1 may be configured so that the direction in which the wearer is to proceed is guided by refractive index distribution control in the eyeglasses 10. Specifically, map data is stored in the server device 30, route data indicating a route to be taken based on the destination data input by the wearer on the map is generated, and the guidance data is acquired by the eyeglasses 10 based on the route data and the position and direction data of the wearer.

The guidance data acquired by the eyeglasses 10 of the first embodiment and the like is not necessarily acquired from outside the eyeglasses 10, but may also be acquired by being calculated within the eyeglasses 10. The eyeglasses 10 may determine, based on the gaze space data acquired by the gaze space data acquisition unit D2, an object to be gazed at by the wearer (for example, a moving object or a protrusion located below), and further generate guidance data by calculating the positional relationship between the object and the wearer based on the gaze space data. The gaze space data acquisition unit D2 may also include an ordinary camera, and the object to be gazed at may be determined based on images from the camera.

In the casing CS of the eyeglasses 10 of the first embodiment and the like, an audio detection unit for detecting surrounding sounds may be provided, and guidance data may be acquired based on audio data obtained when sound is detected. In this case, the gaze guidance region is determined corresponding to the direction in which the sound occurs (and non-guidance regions and the like are determined in directions having low relevance to the sound occurrence), so that the wearer becomes more aware of the sound occurrence. Such eyeglasses 10 are beneficial for elderly users having presbyopia and hearing impairment.

The eyeglasses 10 of the first embodiment and the like may also be eyeglasses-type information devices of XR (AR: Augmented Reality, VR: Virtual Reality, MR: Mixed Reality), such as smart glasses or head-mounted displays having an image display device located on the front side of the variable focus lens LN (the side opposite to the wearer's eye). In such eyeglasses-type information devices, the image display device displays an image representing the wearer's field of view based on three-dimensional space data indicating the situation of the (virtual) three-dimensional space in which the wearer is placed. The guidance data acquisition unit GG generates and acquires guidance data based on the relationship between the position of the display object to be gazed at in the three-dimensional space and the position of the wearer in the three-dimensional space. By guiding the wearer's gaze direction to a particular display object (while restricting the gaze direction toward other objects), eye behaviors likely to cause VR sickness can be alleviated. In such eyeglasses-type information devices, as in the second modification, multiple guidance control modes may be provided and switched according to eye movement and the like, or the guidance control mode and the detection control mode may be switched according to eye movement and the like. By switching to a guidance control mode in which the gaze direction is easily guided according to eye movement and the like, VR sickness, which tends to occur when the wearer experiences eye fatigue, can be reduced.

The eyeglasses 10 of the first embodiment and the like may also be AR or MR eyeglasses-type information devices having an image display device that displays images superimposed on the real world as viewed through the variable focus lens LN. In such eyeglasses-type information devices having an image display device that superimposes images on the real world, images may be displayed superimposed on the non-guidance region, in which visibility has been degraded, so that the superimposed images can be more easily identified. Furthermore, the visibility of the non-guidance region may be periodically varied, or the brightness of the superimposed images may be periodically varied. For example, when the visibility of the non-guidance region deteriorates, the brightness of the superimposed image may be increased, and when the visibility of the non-guidance region improves, the brightness of the superimposed image may be decreased, thereby periodically varying them. As a result, both the real world and the superimposed images can be more easily recognized by the wearer.

As another example of eyeglasses (eyeglasses-type information devices) provided with an image display device that displays images superimposed on the real world together with the variable focus lens LN, there may be eyeglasses in which scattering control is executed in one or more driving regions corresponding to the portion where images are superimposed. Such eyeglasses may also include an eye movement detection unit that detects eye movement, and the degree of visibility deterioration in the driving region under scattering control may be controlled based on the eye movement. Alternatively, the brightness of the image superimposed on the driving region under scattering control may be controlled based on the eye movement. As the eye movement detection unit, a sensor for detecting the wearer's gaze direction from the eye movement may be used. When the wearer's gaze direction is directed toward the driving region under scattering control or toward the superimposed image, the degree of visibility deterioration or the brightness of the superimposed image may be controlled. Such eyeglasses may also include the distance derivation unit TD for deriving the distance to an object the wearer is gazing at, thereby determining whether the wearer is gazing at the superimposed image or the real world. Based on the determination result, the degree of visibility deterioration or the brightness of the superimposed image may be controlled. The superimposed image is displayed on a virtual screen at a predetermined distance set relative to the wearer's eyes, and whether the wearer is gazing at the superimposed image can be determined based on whether the distance to the object of gaze determined from the wearer's gaze direction and the like approximately coincides with the distance to the virtual screen.

In the first embodiment and the like, the variable focus lens LN having driving regions under lens power control and driving regions under scattering control may also be applied as an optical component of an illumination optical system or a projection optical system.

In the eyeglasses 10 of the first embodiment and the like, the variable focus lens LN is assumed to be included, but the invention is not limited to this. Eyeglasses or eyeglasses-type information devices may also employ a liquid crystal member such as a liquid crystal shutter having a plurality of driving regions whose visibility can be controlled, so that the detection control mode and the guidance control mode can be switched, or so that switching between multiple guidance control modes can be performed.

[Second Embodiment]

<1. Overview>

Next, eyeglasses 10 according to a second embodiment will be described. The eyeglasses 10 of the second embodiment are variable focus eyeglasses having a function for suppressing myopia.

As an example of conventional eyeglasses for suppressing the progression of myopia, eyeglasses for correcting peripheral hyperopic defocus are known. Such eyeglasses are provided with fixed-focus lenses designed such that field curvature is formed at the position of the peripheral retina, thereby being considered capable of suppressing elongation of the axial length of the eye.

However, the above-mentioned conventional eyeglasses provide only a narrow clear visual field and require long-time wearing. Therefore, when the eyeball fluctuates due to frequent gaze changes, the effect of suppressing axial myopia becomes difficult to obtain.

Hereinafter, eyeglasses 10 of the second embodiment, which can enhance the effect of suppressing axial myopia, will be described.

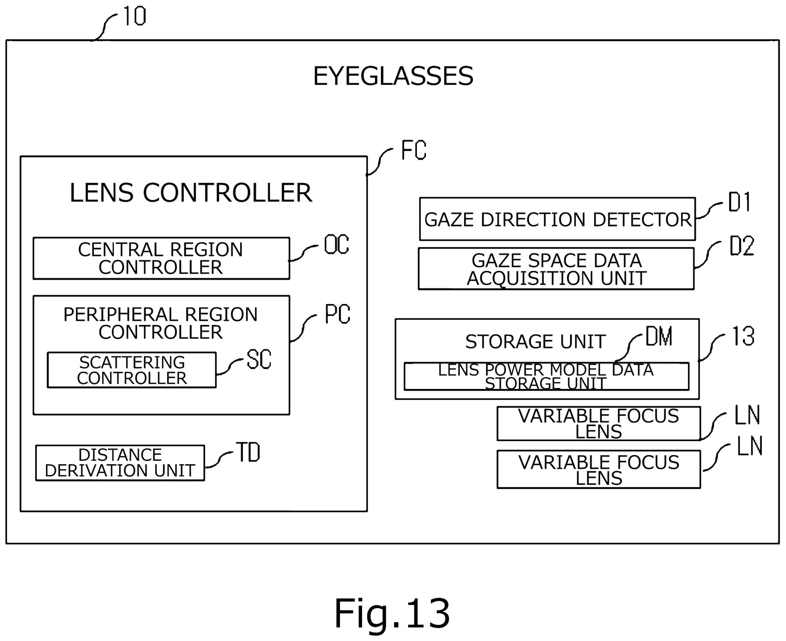

FIG. 13 is a diagram illustrating the functional configuration of the eyeglasses 10 of the second embodiment. The eyeglasses 10 of the second embodiment include, similarly to the first embodiment, a lens controller FC, a gaze direction detector D1, a gaze space data acquisition unit D2, a storage unit 13 including a lens power model data storage unit DM, and two variable focus lenses LN.

Further, in the second embodiment, the lens controller FC includes a central region controller OC, a peripheral region controller PC, and a distance derivation unit TD. The peripheral region controller PC includes a scattering controller SC.

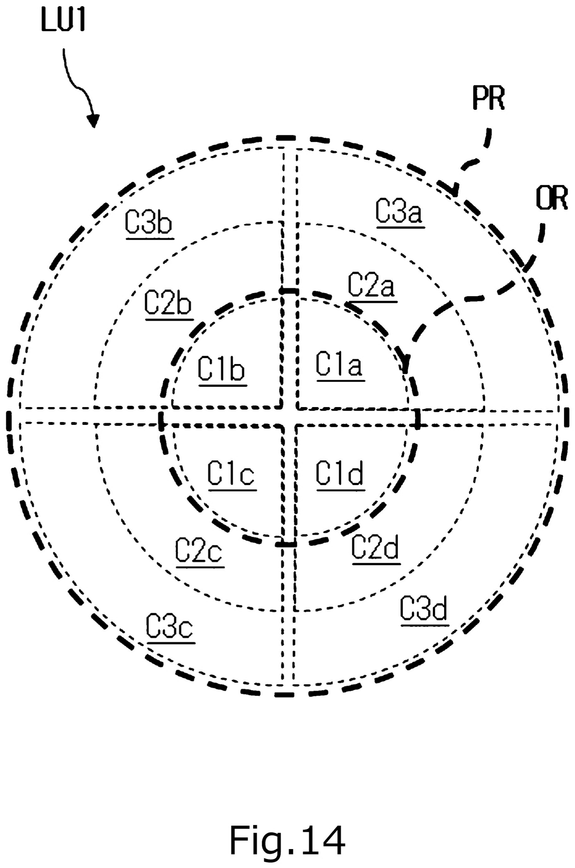

FIG. 14 is a diagram for explaining driving regions in a liquid crystal element LU1 of the eyeglasses 10 of the second embodiment. The eyeglasses 10 of the second embodiment have twelve driving regions C1a-C3d, as in the first embodiment. However, the four central driving regions C1a-C1d are driven uniformly as an optical center region OR, and the remaining eight driving regions C2a-C3d are driven uniformly as a peripheral region PR.

The central region controller OC controls the refractive index distribution of the optical center region OR, and the peripheral region controller PC controls the refractive index distribution of the peripheral region PR. When the wearer's gaze direction detected by the gaze direction detector D1 corresponds to the optical center region OR (for example, when intersecting the optical center region OR), the central region controller OC controls the refractive index distribution of the optical center region OR, similarly to the first embodiment, based on the distance to the object of attention calculated by the distance derivation unit TD and on the lens power model data.

Meanwhile, when the wearer's gaze direction detected by the gaze direction detector D1 does not correspond to the optical center region OR (for example, when intersecting the peripheral region PR), the peripheral region controller PC causes the scattering controller SC to perform control that degrades the visibility of the peripheral region PR. Furthermore, when the wearer's gaze direction corresponds to the optical center region OR, the peripheral region controller PC controls the focal position of the peripheral region PR to be located in front of (closer to the variable focus lens LN than) the focal position of the optical center region OR. Specifically, the peripheral region controller PC controls such that the lens power of the peripheral region PR is a value obtained by adding, for example, +1D to +2D to the lens power set for the optical center region OR (which is a minus lens power in the case of a myopic wearer).

The difference in lens power (addition lens power) between the peripheral region PR and the optical center region OR may be included in the lens power model data. Specifically, the lens power model data storage unit DM may store data indicating the relationship between the distance to the object of attention and the addition lens power. Furthermore, the addition lens power may be varied according to the lens power set in the optical center region OR, or it may be determined based on a function using both the distance to the object of attention and the lens power set in the optical center region OR as variables.

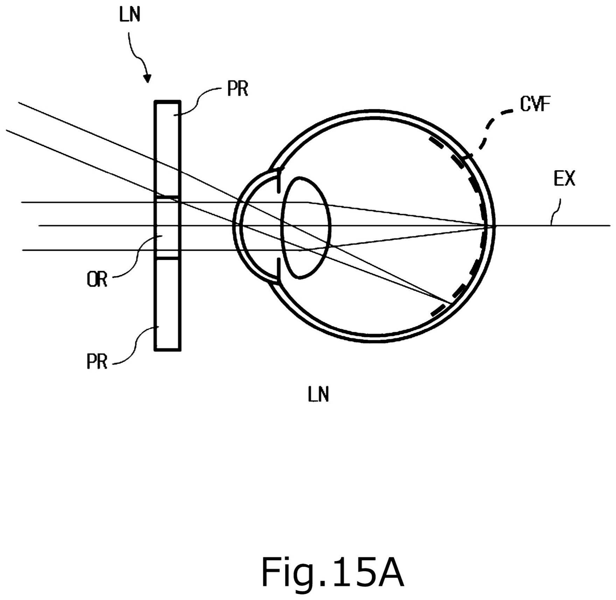

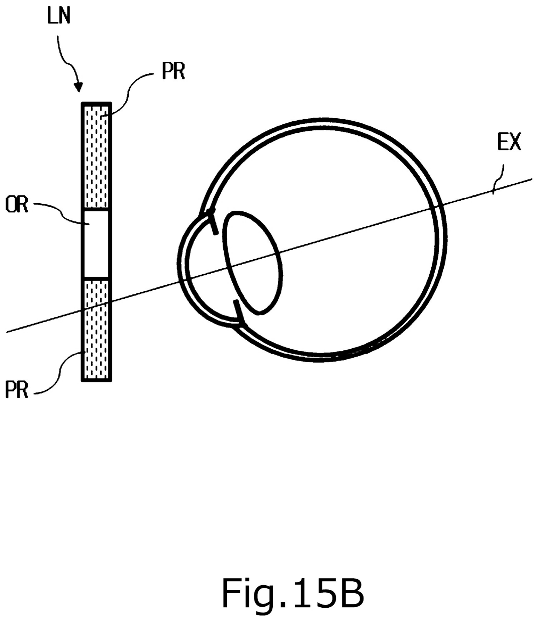

FIGS. 15A and 15B are schematic diagrams illustrating control by the lens controller FC of the eyeglasses 10 of the second embodiment. FIG. 15A illustrates control by the lens controller FC when the wearer's gaze direction corresponds to the optical center region OR, while FIG. 15B illustrates control by the lens controller FC when the wearer's gaze direction is outside the optical center region OR.

As shown in FIG. 15A, when the gaze direction is directed toward the optical center region OR, incident light from this portion is imaged onto the wearer's fovea, and incident light from the peripheral region PR is imaged near the retina. By adding the addition lens power to the peripheral region PR, at least a part of the field curvature CVF generated by the variable focus lens LN is made to approximately coincide with the retina at a location away from the wearer's optical axis EX (peripheral retina away from the fovea).

As shown in FIG. 15B, when the gaze direction is directed outside the optical center region OR, the peripheral region PR is subjected to scattering control, and visibility deteriorates. Therefore, the wearer is prompted to return the gaze to the optical center region OR, where a clear visual field is ensured. Furthermore, as shown in the figure, even when the gaze direction deviates from the optical center region OR, control is performed such that the visibility of the optical center region OR does not deteriorate. For example, the central region controller OC controls to maintain the refractive index distribution state of the optical center region OR immediately before the gaze direction deviates from the center.

As described above, in the eyeglasses 10 of the second embodiment, the refractive index distribution of the variable focus lens LN is controlled according to the gaze direction, as shown in FIGS. 15A and 15B. As a result, when the gaze is directed toward the optical center region OR, a wide visual field is ensured by both the optical center region OR and the peripheral region PR, while the field curvature CVF generated by the peripheral region PR is formed to coincide with the retina, thereby suppressing elongation of the axial length posteriorly. Meanwhile, when the gaze direction deviates from the optical center region OR, the scattering controller SC deteriorates the visibility of the peripheral region PR, thereby prompting the wearer to return the gaze direction.

<2. Modification Example 1 of the Second Embodiment>

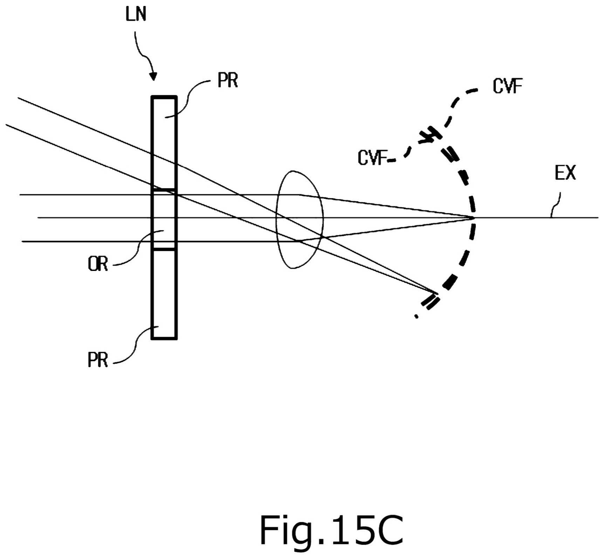

FIG. 15C is a schematic diagram illustrating control by the lens controller FC of the eyeglasses 10 in Modification Example 1 of the second embodiment, and shows how the field curvature CVF vibrates by controlling the refractive index distribution of the peripheral region PR. Unlike FIGS. 15A and 15B, in FIG. 15C, for convenience of explanation, the depiction of the wearer's ocular tissues is omitted as appropriate.

In Modification Example 1, when the wearer's gaze direction corresponds to the optical center region OR, control is performed such that the focal position of the peripheral region PR vibrates in front of the focal position of the optical center region OR (the peripheral region controller PC controls the refractive index distribution of the peripheral region PR such that at least part of the vibration range is located in front of the focal position of the optical center region OR). Since groups of cells serving as growth factors for axial elongation are present in the peripheral retina, providing dynamic stimulation to these cell groups can suppress posterior elongation of the axial length (or alternatively promote growth such that the axial length becomes shorter).

As for the vibration control of the focal position by the peripheral region controller PC, for example, the control may be performed such that the lens power oscillates relative to a predetermined addition lens power (or an addition lens power determined based on lens power model data) within a range of ±1% to ±15%, or within a range of ±2% to ±7%. For example, if the addition lens power is +2D and is vibrated by 2%, the addition lens power of the peripheral region PR is vibration-controlled within a range of 1.96D to 2.04D. Alternatively, irrespective of the addition lens power, the control may be performed such that the focal position vibrates periodically with an amplitude of, for example, 0.02D to 0.1D. The amplitude or vibration range in vibration control may correspond to the thickness of the retina (or the thickness corresponding to the distribution range of cells within the retina that function as axial length growth factors). Data relating to vibration control may be included in the lens power model data, and the vibration range and the like may be determined according to at least one of the distance to the object of attention and the addition lens power. Furthermore, as for vibration control, the focal position may be vibrated at a frequency of, for example, 0.1 Hz to 2 Hz, or at a frequency of 0.3 Hz to 1 Hz.

In a predetermined period defined as one cycle of vibration control by the peripheral region controller PC, the period during which the focal position moves forward is made longer than the period during which the focal position moves backward. Specifically, in one cycle of vibration control, the period during which the lens power gradually changes toward the plus side is longer than the period during which the lens power changes toward the minus side, and in the latter period, the change toward the minus side is made steeper than the change toward the plus side. By adopting such a vibration cycle, the peripheral retinal cells are given a longer period in which they perceive the image plane as being in front (or moving forward), thereby promoting growth that shortens the axial length.

The eyeglasses 10 of Modification Example 1 differ from the eyeglasses 10 of the second embodiment in the above-described respects, but are otherwise substantially the same as the eyeglasses 10 of the second embodiment. Explanation of points substantially the same as the eyeglasses 10 of the second embodiment will be omitted as appropriate.

The vibration control of the variable focus lens LN in Modification Example 1 may be used in applications other than eyeglasses, and may also be applied to contact lenses or intraocular lenses.

As the variable focus lens LN of Modification Example 1, a liquid crystal element such as LX1 shown in FIG. 12 may be applied, and vibration control of the focal position may be performed in a region located around the region corresponding to the gaze direction.

[Other]

The lens power model data in the first embodiment and the like may be generated based on the results of measurements such as an autorefractor, the axial length of the eye, or the shape of the surrounding retina, and may also be provided to the eyeglasses 10 through a network. Furthermore, the lens power model data may also be generated by manual input by the wearer through an operation device.

The lens power model data in the first embodiment and the like is represented as data (a function or table) showing the relationship between the distance to an object of interest and the lens power to be set. However, the data is not limited thereto, and may instead be a relational expression that derives the lens power to be set based on other variables (for example, a convergence angle derived from the gaze directions of both eyes). In addition, although in the eyeglasses 10 of the first embodiment and the like, the lens power control is performed based on the lens power model data, the invention is not limited thereto. For example, the lens power controller DC may perform focus formation such that the lens power is a fixed value inputted in advance by the wearer.

In the second embodiment, the liquid crystal layer is arranged in both the optical center region OR and the peripheral region PR, and the lens power is controlled in the optical center region OR as well. However, the embodiment is not limited thereto. For example, the optical center region OR may be configured of a fixed-focus myopia lens without arranging a liquid crystal layer therein.

Although in the second embodiment the eyeglasses 10 are described for myopia applications, the invention is not limited thereto. For example, the eyeglasses may be applied for hyperopia applications by setting the lens power in the optical center region OR to the plus side and the addition power in the peripheral region PR to a value of minus 1D to 2D.

In the eyeglasses 10 of the first and second embodiments and the like, each unit electrode U1 of the liquid crystal element LU1 has the structure shown in FIG. 5. However, the invention is not necessarily limited to this configuration. For example, the first electrode E1 and the second electrode E2 may be formed in contact with the resistance layer HR, or may be disposed closer to the liquid crystal layer LC than the resistance layer HR. Furthermore, in the first embodiment and the like, each driving region is formed as an arc-shaped region with a central angle of 90 degrees, as shown in FIG. 8 and the like. However, this configuration is not limiting, and the central angle may have another value, or the number of driving regions may be larger than twelve.

In the eyeglasses 10 of the first and second embodiments and the like, a concave lens may be laminated on the wearer's side of the variable focus lens LN, or a convex lens may be laminated on the side opposite the wearer. Moreover, for astigmatism correction, the variable focus lens LN may be configured as a combination of the liquid crystal element LU1 that generates a concentric Fresnel lens-shaped refractive index distribution as in FIG. 7, and one or more liquid crystal elements LF1 that generate a linear Fresnel lens-shaped refractive index distribution as in FIG. 11.

As the liquid crystal layer LC in the first embodiment and the like, a polymer network type liquid crystal material may be used. Furthermore, for example, an insulating wall-like structure may be disposed at the boundary between two adjacent unit electrodes U1 to partition the liquid crystal layer LC. In addition, the eyeglasses 10 may also be of the goggle type.

The present invention is not limited to the embodiments described above and may be variously modified and combined within the scope not departing from the gist thereof. For example, the configurations described in the above embodiments may be replaced with configurations that are substantially identical, configurations that exhibit the same functions and effects, or configurations that achieve the same purpose.

REFERENCE SIGNS LIST

| | |
|---|---|
| 1 | eyeglasses system |
| 10 | eyeglasses |
| 30 | server device |
| 101 | rim |
| 103 | temple |
| 105 | bridge |
| NP | nose pad |
| CS | casing |
| D1 | gaze direction detector |
| D2 | gaze space data acquisition unit |
| GG | guidance data acquisition unit |
| TD | distance derivation unit |
| DR | region determination unit |
| LN | variable focus lens |
| FC | lens controller |
| DC | lens power controller |
| SC | scattering controller |
| DM | lens power model data storage unit |
| 33 | guidance data generation unit |
| 11, 31 | transmission unit |
| 12, 32 | reception unit |
| 13 | storage unit |
| OC | central region controller |
| PC | peripheral region controller |
| OR | optical center region |
| PR | peripheral region |
| EX | optical axis |
| CVF | field curvature |
| LU1, LU2, LF1, LF2, LX1, LX2 | liquid crystal element |
| AX1 | first controller |
| AX2 | second controller |
| B1, B2 | transparent substrate |
| LC | liquid crystal layer |
| U1 | unit electrode |
| CT | center electrode |
| CC | core electrode |
| LA | optical axis |
| RF | refractive index distribution |
| E1 | first electrode |

| | |
|---|---|
| E2 | second electrode |
| E3 | counter electrode |
| W1 | first lead wire |
| W2 | second lead wire |
| W3 | third lead wire |
| W4 | fourth lead wire |
| W5 | fifth lead wire |
| W6 | sixth lead wire |
| W7 | seventh lead wire |
| WS | lead wiring region |
| HR | resistance layer |
| AR | region |
| IS1, IS2 | insulating layer |
| C1a-C1d, C2a-C2d, C3a-C3d | driving region |
| Y1, Y2a, Y2b, Y3a, Y3b | driving region |
| H1, H2a, H2b, H3a, H3b | driving region |

**Claims**

1. Eyeglasses comprising:

   a variable focus lens;
   a lens controller configured to control a refractive index distribution generated within the variable focus lens; and
   a guidance data acquisition unit configured to acquire a guidance data regarding a gaze direction to which a wearer is to be guided, wherein
   the lens controller is configured to control the refractive index distribution based on the guidance data.

2. The eyeglasses according to claim 1, wherein

   the variable focus lens comprises a liquid crystal lens, and is divided into a plurality of driving regions,
   the lens controller is configured to determine, based on the guidance data, at least one driving region corresponding to the gaze direction to be guided as a gaze guidance region, and generate a Fresnel lens-like refractive index distribution within the gaze guidance region.

3. The eyeglasses according to claim 2, wherein
   the lens controller is configured to determine at least one driving region located outside the gaze guidance region as a non-guidance region, and control such that visibility in the non-guidance region is worse than that in the gaze guidance region.

4. The eyeglasses according to claim 3, wherein

   each of the plurality of driving regions is configured to perform focus control for forming a focus,
   the driving region determined as the non-guidance region is controlled such that visibility is worse than when the focus control is performed.

5. The eyeglasses according to claim 4, further comprising a gaze direction detector configured to detect the gaze direction of the wearer, wherein
   the lens controller is configured to determine at least one driving region corresponding to the gaze direction detected by the gaze direction detector as a gaze region, and control such that visibility in the gaze region is worse than in the gaze guidance region and better than in the non-guidance region.

6. The eyeglasses according to claim 5, wherein
   the lens controller is configured to control such that, in the non-guidance region, a degree of degradation in visibility periodically changes.

7. The eyeglasses according to claim 5, wherein
   the lens controller is configured to control such that, in the gaze region, a degree of degradation in visibility periodically changes.

8. The eyeglasses according to claim 5, wherein
the lens controller is configured to control such that visibility improves from the gaze region toward the gaze guidance region.

9. The eyeglasses according to any one of claims 1 to 8, further comprising a gaze direction detector configured to detect the gaze direction of the wearer, wherein
the lens controller has switching means configured to switch between a guidance control mode for controlling the refractive index distribution based on the guidance data and a detection control mode for controlling the refractive index distribution in accordance with the gaze direction detected by the gaze direction detector.

10. The eyeglasses according to any one of claims 3 to 8, wherein

a plurality of modes are set such that degrees of degradation in visibility in the non-guidance region are different,
the lens controller has switching means configured to switch between the plurality of modes.

11. The eyeglasses according to claim 10, further comprising means for tracking eye movement of the wearer,
the lens controller is configured to switch between the plurality of modes based on the eye movement.

12. The eyeglasses according to any one of claims 1 to 8, further comprising a gaze space data acquisition unit configured to acquire gaze space data regarding a state of a space on which a gaze of the wearer falls, wherein
the guidance data is acquired based on the gaze space data.

13. The eyeglasses according to any one of claims 1 to 8, further comprising a sound detector configured to detect sound emitted around the wearer, wherein
the guidance data is acquired based on the sound detected by the sound detector.

14. The eyeglasses according to any one of claims 1 to 8, wherein
the guidance data acquisition unit is configured to acquire the guidance data by receiving data from an external source.

15. The eyeglasses according to any one of claims 1 to 8, wherein

the eyeglasses comprise an eyeglasses-type information device having an image display device on a front side of the variable focus lens,
the image display device is configured to display an image representing a view from a viewpoint of the wearer based on three-dimensional space data indicating a situation of a three-dimensional space in which the wearer is placed,
the guidance data acquisition unit is configured to acquire the guidance data based on a positional relationship in the three-dimensional space between an object to be gazed at by the wearer and the wearer.

16. The eyeglasses according to any one of claims 3 to 8, wherein

the eyeglasses comprise an eyeglasses-type information device having an image display device configured to display an image superimposed on a real world observed by the wearer through the variable focus lens,
the image display device is configured to control to display the image in a portion superimposed on the non-guidance region.

17. The eyeglasses according to claim 16, wherein

the non-guidance region is controlled such that a degree of degradation in visibility periodically changes,
the image display device is configured to vary brightness of the image displayed in a portion superimposed on the non-guidance region in accordance with the degree of degradation in visibility.

Fig.1

Fig.2

LN

B1
LC    LU1
B2

B1
LC    LU2
B2

# Fig.3A

EP 4 722 792 A1

Fig.3B

26

Fig.3C

Fig.4

Fig.5

EP 4 722 792 A1

Fig.6

Fig.7

LU1

C3b

C2b

C1b

C3a

C2a

C1a

C1c

C2c

C3c

C1d

C2d

C3d

☐ GAZE GUIDANCE
REGION
▦ NON-GUIDANCE
REGION

Fig.8

EP 4 722 792 A1

```
        ┌─────────────────────┐
        │   VARIABLE FOCUS    │
        │   LENS CONTROL      │
        └─────────────────────┘
                  │
                  ▼
              ◇ S901
       ACQUIRE GUIDANCE DATA ──────── YES
              ◇                         │
              │ NO                      ▼
              ▼                  ┌──────────────────────┐
    ┌──────────────────┐ S902   │ DETERMINE GAZE       │ S905
    │ ACQUIRE GAZE     │        │ GUIDANCE REGION AND  │
    │ DIRECTION        │        │ NON-GUIDANCE REGION  │
    └──────────────────┘        └──────────────────────┘
              │  S903                   │
              ▼                         ▼
    ┌──────────────────┐        ┌──────────────────────┐
    │ CALCULATE        │        │ CALCULATE DISTANCE   │ S906
    │ DISTANCE         │        │ TO GAZE TARGET       │
    │ TO GAZE TARGET   │        │ AFTER GAZE GUIDANCE  │
    └──────────────────┘        └──────────────────────┘
              │                         │
              ▼  S904                   ▼
    ┌──────────────────┐        ┌──────────────────────┐
    │ LENS POWER       │        │ LENS POWER CONTROL   │ S907
    │ CONTROL          │        │ OF GAZE-GUIDANCE     │
    │ WITH REFERENCE   │        │ REGION WITH          │
    │ TO POWER MODEL   │        │ REFERENCE TO POWER   │
    │ DATA             │        │ MODEL DATA           │
    └──────────────────┘        └──────────────────────┘
              │                         │
              │                         ▼
              │                 ┌──────────────────────┐
              │                 │ SCATTERING CONTROL   │ S908
              │                 │ IN NON-GUIDANCE      │
              │                 │ REGION               │
              │                 └──────────────────────┘
              │                         │
              └─────────────────────────┘
```

Fig.9

LU1

GAZE GUIDANCE
REGION
NON-GUIDANCE
REGION
GAZE REGION
TRANSITION
REGION

Fig.10A

LU1

C3b
C2b
C1b
C3a
C2a
C1a
C1c
C2c
C3c
C1d
C2d
C3d

☐ GAZE GUIDANCE REGION
▦ NON-GUIDANCE REGION

Fig.10B

Fig.10C

Fig.11

Fig.12

EP 4 722 792 A1

EYEGLASSES

LENS CONTROLLER

CENTRAL REGION CONTROLLER — OC

PERIPHERAL REGION CONTROLLER — PC

SCATTERING CONTROLLER — SC

DISTANCE DERIVATION UNIT — TD

GAZE DIRECTION DETECTOR — D1

GAZE SPACE DATA ACQUISITION UNIT — D2

STORAGE UNIT — DM — 13

LENS POWER MODEL DATA STORAGE UNIT

VARIABLE FOCUS LENS — LN

VARIABLE FOCUS LENS — LN

FC

10

Fig.13

LU1

PR

OR

C3b

C3a

C2b

C2a

C1b

C1a

C1c

C1d

C2c

C2d

C3c

C3d

Fig.14

Fig.15A

Fig.15B

Fig.15C

## INTERNATIONAL SEARCH REPORT

| International application No. |
| --- |
| **PCT/JP2024/018771** |

### A. CLASSIFICATION OF SUBJECT MATTER

*G02C 7/00*(2006.01)i; *G02B 1/08*(2006.01)i; *G02B 3/00*(2006.01)i; *G02B 3/14*(2006.01)i; *G02F 1/13*(2006.01)i; *G02F 1/133*(2006.01)i; *G02F 1/1333*(2006.01)i

FI:   G02C7/00; G02B1/08; G02B3/14; G02B3/00 B; G02F1/13 505; G02F1/133 580; G02F1/1333

According to International Patent Classification (IPC) or to both national classification and IPC

### B. FIELDS SEARCHED

Minimum documentation searched (classification system followed by classification symbols)

G02C7/00; G02B1/08; G02B3/00; G02B3/14; G02F1/13; G02F1/133; G02F1/1333

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2023-030002 A (LEBEN CO., LTD.) 07 March 2023 (2023-03-07) | 1-17 |
| A | JP 2023-032886 A (TOYOTA JIDOSHA KABUSHIKI KAISHA) 09 March 2023 (2023-03-09) | 1-17 |
| A | JP 2022-538216 A (ESSILOR INTERNATIONAL) 01 September 2022 (2022-09-01) | 1-17 |
| A | JP 2019-002977 A (SHIBUYA, Yoshikazu) 10 January 2019 (2019-01-10) | 1-17 |
| A | US 2016/0150951 A1 (BEIJING ZHIGU RUI TUO TECH CO., LTD.) 02 June 2016 (2016-06-02) | 1-17 |
| A | CN 108508634 A (SHENZHEN BESTONE TECHNOLOGY CO., LTD.) 07 September 2018 (2018-09-07) | 1-17 |
| A | US 11086143 B1 (APPLE INC.) 10 August 2021 (2021-08-10) | 1-17 |

☐ Further documents are listed in the continuation of Box C.      ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 July 2024** | **13 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/018771**

| Patent document cited in search report | | | Publication date (day/month/year) | Patent family member(s) | | | Publication date (day/month/year) |
|---|---|---|---|---|---|---|---|
| JP | 2023-030002 | A | 07 March 2023 | (Family: none) | | | |
| JP | 2023-032886 | A | 09 March 2023 | US | 2023/0066068 | A1 | |
| | | | | CN | 115723687 | A1 | |
| JP | 2022-538216 | A | 01 September 2022 | US | 2022/0334410 | A1 | |
| | | | | WO | 2020/260105 | A1 | |
| | | | | EP | 3757662 | A1 | |
| | | | | CN | 113892051 | A | |
| | | | | KR | 10-2022-0022479 | A | |
| JP | 2019-002977 | A | 10 January 2019 | US | 2018/0356652 | A1 | |
| US | 2016/0150951 | A1 | 02 June 2016 | WO | 2015/043275 | A1 | |
| | | | | CN | 103595912 | A | |
| CN | 108508634 | A | 07 September 2018 | (Family: none) | | | |
| US | 11086143 | B1 | 10 August 2021 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019002977 A
- JP 5172148 B

- JP 2023030002 A